# EUROPEAN PATENT SPECIFICATION

(11) **EP 3 895 999 B1**
(45) Date of publication and mention of the grant of the patent: **10.09.2025**
(21) Application number: 19883842.7
(22) Date of filing: 01.02.2019
(51) Int. Cl.: B65D 43/02

(54) **PAPER COVER AND METHOD FOR MANUFACTURING PAPER COVER**
PAPIERABDECKUNG UND VERFAHREN ZUR HERSTELLUNG EINER PAPIERABDECKUNG
COUVERCLE EN PAPIER ET PROCÉDÉ DE FABRICATION DE COUVERCLE EN PAPIER

(30) Priority: 16.11.2018 US 201862768142 P; 23.11.2018 US 201862770852 P; 29.11.2018 US 201862772649 P; 03.12.2018 US 201862774355 P; 03.12.2018 JP 2018226847; 06.12.2018 US 201862775935 P; 14.12.2018 US 201862779530 P; 18.12.2018 US 201862781026 P; 26.12.2018 US 201862784863 P; 28.12.2018 US 201862785763 P; 31.12.2018 US 201862786567 P; 09.01.2019 US 201962790050 P; 11.01.2019 JP 2019003320; 18.01.2019 US 201962793943 P; 25.01.2019 US 201962796617 P; 28.01.2019 US 201962797397 P
(43) Date of publication of application: 20.10.2021
(73) Proprietor: Yamada, Kikuo, Shinagawa-ku Tokyo 141-0022 (JP)
(72) Inventor: Yamada, Kikuo, Shinagawa-ku Tokyo 141-0022 (JP)
(74) Representative: Algemeen Octrooi- en Merkenbureau B.V.
(86) International application number: PCT/JP2019/003670
(87) International publication number: WO 2020/100316

(56) References cited:
- DE-A1- 4 304 130
- DE-A1- 4 429 057
- JP-A- 2001 096 645
- JP-A- 2002 096 824
- JP-A- 2002 225 965
- JP-A- 2004 001 892
- JP-A- 2004 123 105
- JP-A- 2005 343 557
- JP-A- 2010 247 837
- JP-A- 2012 066 856
- JP-A- H11 124 121
- JP-U- H0 471 610
- JP-U- H0 728 814
- US-A1- 2010 252 555
- US-A1- 2016 083 151

## Description

### [TECHNICAL FIELD]

The present invention relates to a paper lid and a method for producing a paper lid, particularly the present invention relates to a paper lid that is suitable for a liquid container, and a method for producing the same.

### [BACKGROUND ART]

A paper cup is used as a container for various drinks such as coffee and tea. The paper cup is covered with a lid such that a liquid which is a content does not leak from the paper cup. In many cases, a plastic lid is used as the lid and does not match the recent trend that the use of plastics is reduced and an environmentally friendly product is used. In addition, a technique where a bottom part of a paper cup is used as a paper lid has been also proposed; however, the usability has not been taken into consideration (Patent Document 1).

### [PRIOR ART DOCUMENT]

### [PATENT DOCUMENT]

[Patent Document 1] Japanese Patent Application Publication No. 2006-248530

### [SUMMARY OF THE INVENTION]

### [PROBLEMS TO BE SOLVED BY THE INVENTION]

According to Patent Document 1, the taper of the paper cup and the taper of the lid are tapered forward and there is a risk of a leakage of the content when the paper cup is inclined, and thus the usability is not sufficient. In addition, according to Patent Document 1, a mere proposal of the paper lid has been made and details have not been studied, and thus the usability has not been sufficient.
US2010/252555A1 discloses a container lid comprising a) a base; b) a wall extending substantially vertically from the base; c) a wall support element positioned remote from the base; and d) wherein the lid comprises a paper-based material. The lid is to be inserted into an opening of a container.
US2016/083151 discloses a lid for a beverage cup, made from a paper material or a paper-like material, having a lid-plate element and a wall element; wherein the lid-plate element includes a lid plate, and the wall element includes an encircling wall; wherein the lid has a receptacle encircling a central axis, for a rolled lip rim of the beverage cup; and wherein the lid plate and the encircling wall are interconnected in such a manner that the lid plate is kept at a spacing above the receptacle. The beverage cup has a downward taper whereas the lid has an upward taper.
JP2004/123105 discloses a paper container made of a container body and a lid fitted to the container body. The container body has a body wall and a bottom wall and has a reinforcing portion outside the upper opening end of the body wall. The lid has a circular wall comprising a lower curled portion which is formed in a post-processing carried out after fitting the lid onto the container body.
The present invention has been made in light of the foregoing point, and an object of the present invention is to provide a paper lid with good usability.

### [MEANS FOR SOLVING THE PROBLEMS]

The invention provides solutions provided in the claims.

### [EFFECTS OF THE INVENTION]

According to claim 1, the sealability of the paper lid is improved; and thereby, it is possible to improve the usability of the paper lid.

### [BRIEF DESCRIPTION OF THE DRAWINGS]

Fig. 1 is a cross-sectional view of a paper lid and a container where the lid has not all the technical features of the invention;
Fig. 2 is a schematic view of the paper lid of Fig. 1:
Fig. 3 is a reference view illustrating a plastic lid;
Fig. 4 is a cross-sectional view of a paper lid and a container where the lid has not all the technical features of the invention;
Fig. 5 is a schematic view of a paper lid with a holder where the lid has not all the technical features of the invention;
Fig. 6 is a schematic view of a paper lid with a holder where the lid has not all the technical features of the invention;
Fig. 7 illustrates an example where a paper lid is provided with a handgrip and a holder;
Fig. 8 is a schematic view of a paper lid of a kit of parts according to the invention;
Fig. 9 is a schematic view of a paper lid of another embodiment;
Fig. 10 is a view illustrating a method for producing the paper lid of Fig. 9;
Fig. 11 is a view illustrating the method for producing the paper lid of Fig. 9;
Fig. 12 is a view illustrating another method for producing the paper lid;
Fig. 13 is a view illustrating an example of the fitting of a curl portion;
Fig. 14 is a cross-sectional view illustrating a modification example of a seal portion, outside the scope of the present invention;
Fig. 15 is a cross-sectional view illustrating a modification example of the seal portion, outside the scope of the present invention;
Fig. 16 is a schematic view of a paper lid of another embodiment;
Fig. 17 is a cross-sectional view of the paper lid of Fig. 16;
Fig. 18 is a view illustrating an example of the joining of a top lid portion and an engaging portion;
Fig. 19 is a modification example of the paper lid of Fig. 9;
Fig. 20 is an enlarged cross-sectional view of a window portion of Fig. 16;
Fig. 21 is a modification example of the window portion of the paper lid of Fig. 16;
Fig. 22 is a cross-sectional view of a paper lid of another embodiment;
Fig. 23 is a cross-sectional view illustrating a seal portion of the paper lid of Fig. 22;
Fig. 24 is a schematic view and a cross-sectional view illustrating one example of an engaging portion of Fig. 22(f);
Fig. 25 is a schematic view, a partial enlarged view, and an A-A cross-sectional view illustrating a display portion 40 of a paper lid 1, and is a schematic view illustrating an example where three display portions 40 are provided without gaps therebetween and a front view of the paper lid 1;
Fig. 26 is a development view of the paper lid 1 excluding a top lid portion 2;
Fig. 27 is a cross-sectional view of the paper lid of Fig. 22;
Fig. 28 is a flowchart illustrating one example of a method for producing a paper lid;
Fig. 29 is a schematic view of the method for producing a paper lid;
Fig. 30 is a view illustrating a method for extracting a top lid portion from a raw material;
Fig. 31 is a cross-sectional view of a forming device that forms a protruding portion; and
Fig. 32 is a view illustrating a modification example.

### [MODES FOR CARRYING OUT THE INVENTION]

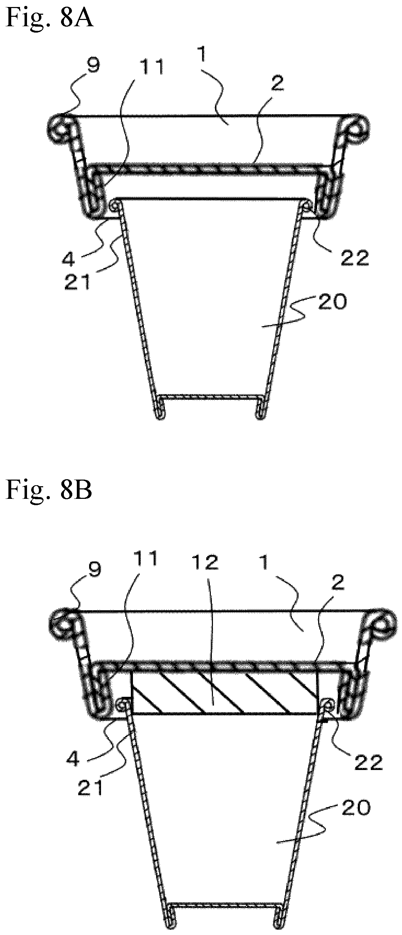

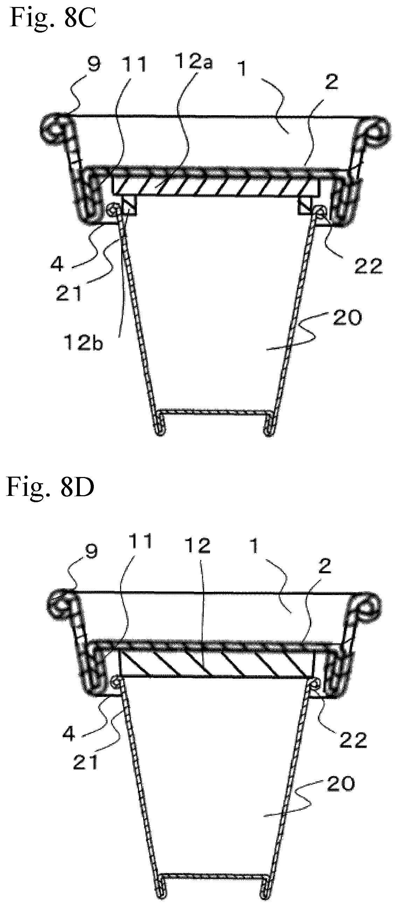

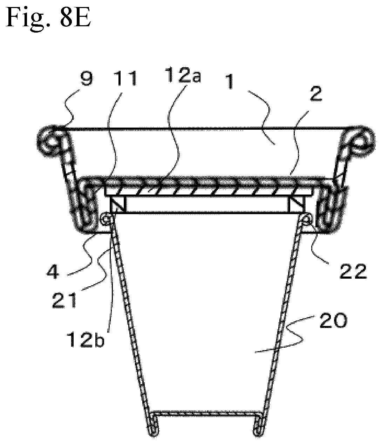

Hereinafter, embodiments of the present invention will be described with reference to Figs. 8 to 32. However, in the embodiments, the same reference sign will be assigned to a configuration having the same function, and duplicate descriptions will be omitted or simplified. First to fourth embodiments are not according to the present invention.

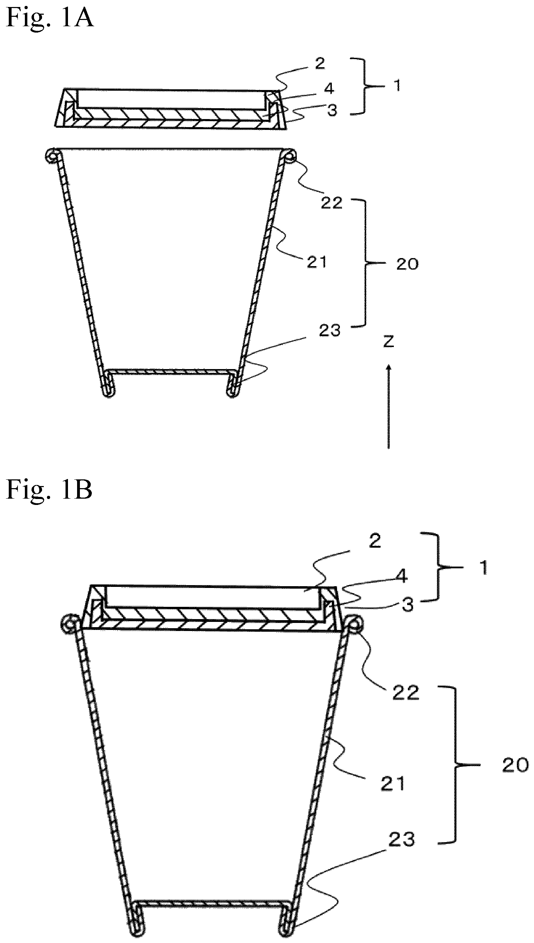

Fig. 1 is a cross-sectional view of a paper lid 1 and a container 20. Fig. 1(a) is a cross-sectional view illustrating a state where the paper lid 1 is removed from the container 20, and Fig. 1(b) is a cross-sectional view illustrating a state where the paper lid 1 is fitted to the container 20.

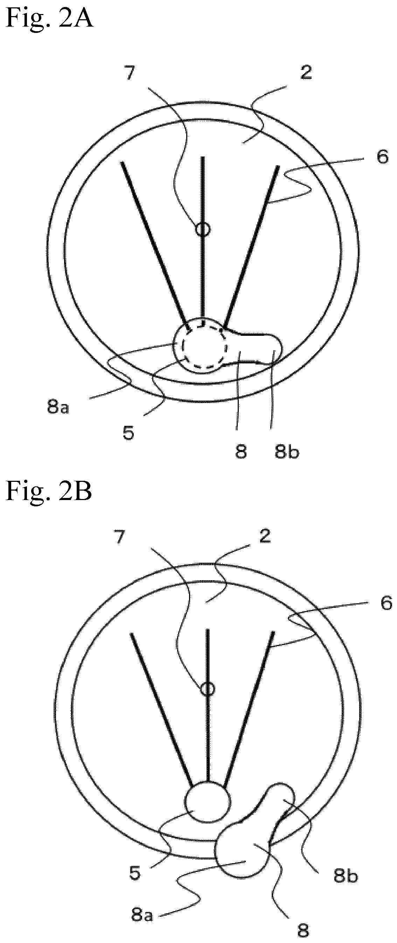

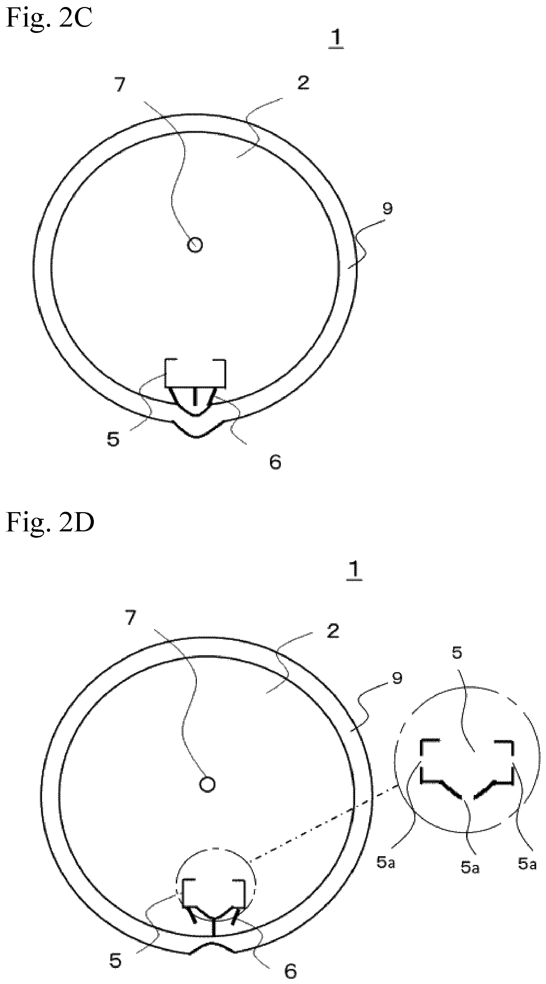

Fig. 2 is a schematic view of the paper lid 1 of Fig. 1 as seen from above. Fig. 2(a) illustrates a state where a seal portion 8 seals a drinking spout 5, and Fig. 2(b) is a view illustrating a mode where the seal portion 8 is removed from the drinking spout 5. In addition, Figs. 2(c) and 2(d) illustrate a configuration where the drinking spout 5 is formed by bending toward a center of the paper lid 1, and a cut is indicated by a solid line.

### (Paper Lid)

The paper lid 1 includes a top lid portion 2, a tapered portion 3 formed in the top lid portion 2, a bottom lid portion 4, the drinking spout 5, a groove portion 6, an air hole portion 7, and the seal portion 8.

The paper lid 1 is inserted inside the container 20 and is made of a paper material. The paper material may contain at least a cellulose component, and the content of the cellulose component is not specifically limited. In addition, a paper material formed by papermaking may be used.

In addition, as the paper material, various waterproof papers such as a coated paper of which the surface is provided with a coating layer may be used, or a coating layer may be provided at least on a container side surface of the paper material. A film or a coating agent can be used as the coating layer. As the film and the coating agent, it is possible to use polystyrene, polyethylene, polypropylene, polyethylene terephthalate, polyurethane, polyvinyl chloride, polyvinylidene chloride, polyvinyl acetate, cyanoacrylate, epoxy resin, polyacrylic resin, polymethacrylic resin, nylon, polycarbonate; biodegradable resins or biodegradable resin mixtures such as polycaprolactone, polyhydroxyalkanoate, polyhydroxybutyrate, polylactic acid, and starch-based resin such as esterified starch, cellulose acetate, polyethylene succinate, polyvinyl alcohol, polyglycolic acid, chitosan/cellulose/starch, poly(hydroxybutyrate/hydroxyhexanoate), poly(caprolactone/butylene succinate), polybutylene succinate, poly(butylene succinate/adipate), poly(butylene succinate/carbonate), poly(ethylene terephthalate/succinate), poly(butylene adipate/terephthalate), and poly(tetramethylene adipate/terephthalate); biodegradable biomass resins, fluororesins; silicone resin; ultraviolet curable resin; copolymers of monomer such as ethylene-vinyl acetate copolymer, ethylene-vinyl alcohol copolymer, ethylene-propylene copolymer, ethylene-propylene-butadiene copolymer, acrylic-styrene copolymer, styrene-butadiene copolymer, acrylonitrile-butadiene-styrene copolymer which form the foregoing resins; natural resin; paraffin, gelatin; cellophane; and polymethylpentene. The coating layer can be formed by applying or spraying films, emulsions, or solutions made of the foregoing resins, or coating agents such as a fluorine-based coating agent, a silicon-based coating agent, and a varnish.

The film may be a single layer film or a multilayer film, and not only one type of coating agent may be applied but also two or more types of coating agents may be repeatedly applied. It is desirable that a film made of a biodegradable resin such as a polylactic acid or a biodegradable resin mixture is used as the film or the coating agent, and in this manner, it is possible to reduce the environmental load. Incidentally, even in a case where the material contains terephthalate such as poly(tetramethylene adipate/terephthalate), when the content is approximately 40%, the material has biodegradability.

In addition, when a coating agent is used, for example, a vegetable starch which does not adversely affect the human body may be used. Incidentally, in the present embodiment, a bottom part of a paper cup can be also used as the paper lid 1.

A step (sunken portion) having a depth of approximately 3 mm to 12 mm toward a lower side (container 20 side) is formed in the top lid portion 2, and the tapered portion 3 is formed in a side surface of the top lid portion 2. The tapered portion 3 is a taper (reverse taper) of which the taper direction is reverse to that of a tapered portion 21 to be described later of the exterior of the container 20, and has a tapered shape that is widened toward the container 20. The dimension of the tapered portion 3 in a height direction (Z direction in Fig. 1) is larger than the dimension of a curl portion 22 to be described later of the container 20 in the height direction. Accordingly, when the paper lid 1 is inserted inside the container 20, even in a case where the container 20 is overturned, it is possible to reduce the risk of spilling a content of the container 20.

When the tapered portion 3 and the tapered portion 21 are tapered reversely to each other, since a fitting force functions in surface contact but in point contact (line contact), the fitting force is exerted on a fitting portion in a more concentrated manner compared to the case of surface contact. For this reason, the fittability of the tapered portion 3 and the tapered portion 21 is improved, and thus the sealability of the paper lid 1 is improved. In addition, since the tapered portion 3 and the tapered portion 21 are made of a paper material, the tapered portion 3 and the tapered portion 21 are deformed due to fitting, to form a slight planar portion. The planar portion improves the fittability of the tapered portion 3 and the tapered portion 21. In addition, even when the tapered portion 3 has a linear shape without a taper, it is possible to obtain the foregoing effect. Namely, the inclination of the tapered portion 3 may be different from the inclination of the tapered portion 21.

Incidentally, in order to improve the sealability of the paper lid 1, the tapered portion 3 may be provided with an irregular uneven portion or a step portion.

The bottom lid portion 4 is shaped to engage with the top lid portion 2. Various methods such as press working, ultrasonic joining, heat sealing, and an adhesive (for example, a starch paste) can be used to realize the engagement between the bottom lid portion 4 and the top lid portion 2.

The drinking spout 5 is an opening provided in the top lid portion 2 and the bottom lid portion 4, to serve as a drinking spout or a hole into which a straw is inserted, and the size or the shape thereof can be appropriately set. In addition, a cut line with a half-cut may be provided, and a user may remove the half-cut.

In addition, as illustrated in Figs. 2(c) and 2(d), the drinking spout 5 includes the cut indicated by the solid line, and a part where no cut is formed, and the part where no cut is formed serves as a hinge. The drinking spout 5 is opened by bending the cut indicated by the solid line toward the center of the paper lid 1. In this case, the cut is provided in the top lid portion 2 and the bottom lid portion 4 is provided with an opening portion corresponding to the cut, so that the drinking spout 5 can be easily bent. In addition, the cut line is cut from a top lid portion 2 side toward the bottom lid portion 4, and when the cut line forms a V-shape (inverted triangular shape), in a state where the drinking spout 5 is closed, the content is less likely to leak from the container 20 to the top lid portion 2 side. Incidentally, the shape of the drinking spout 5 may be a linear shape, a curved shape, or a shape where a curved shape is added to a linear shape, or as illustrated in Fig. 2(d), the drinking spout 5 may be shaped such that a pull-up portion is formed.

In addition, when a curl portion 9 is widened outward as illustrated in Fig. 2(c) or an outer ring of the curl portion 9 is collapsed inward as illustrated in Fig. 2(d) to correspond to the drinking spout 5, the content is easily drunken from the drinking spout 5. Incidentally, instead of the outer ring of the curl portion 9 in Fig. 2(d), an inner ring thereof may be collapsed outward. In addition, as illustrated in a partial enlarged view of Fig. 2(d), a connected portion 5a where no cut is formed may be provided in a part of a cut portion, which is indicated by the solid line, in the drinking spout 5. When the connected portion 5a is present, it is possible to recognize that the drinking spout 5 is not open. On the contrary, when the connected portion 5a is not present, it is possible to recognize that the drinking spout 5 is open. In relation to this, the connected portion 5a allows the user to recognize whether or not the openness of the drinking spout 5 is false. Incidentally, the formation positions or the number of the connected portions 5a can be randomly set. Incidentally, the connected portion 5a can be formed also in the drinking spout 5 in Figs. 2(a) to 2(c).

As illustrated in Figs. 2(a) and 2(b), the groove portion 6 is a streak that is provided in the top lid portion 2, for example, by press working, and does not penetrate through the top lid portion 2. In the present embodiment, a plurality of the groove portions 6 are provided and connected to the drinking spout 5. When the content of the container 20 has accumulated from the drinking spout 5 to the sunken portion (step portion) of the top lid portion 2, the groove portions 6 guide the content, which has accumulated in the sunken portion of the top lid portion 2, to the drinking spout 5 to return the content to the container 20.

In addition, since the groove portions 6 are provided by press working, it is possible to improve the strength of the top lid portion 2 or the paper lid 1.

As illustrated in Figs. 2(c) and 2(d), the groove portions 6 may be provided from the drinking spout 5 toward the curl portion 9. In addition, the groove portions 6 may be formed to reach an edge portion, or may be formed up to a place immediately before the edge portion. The groove portions 6 illustrated in Fig. 2(c) and 2(d) is capable of guiding the content from the drinking spout 5 to the mouth of the user, and when the user separates the mouth from the drinking spout 5, the groove portions 6 are capable of returning the content, which remains in the vicinity of the drinking spout 5, to the drinking spout 5. Incidentally, Figs. 2(c) and 2(d) illustrate three groove portions 6; however, the number of the groove portions 6 may be any number, and the groove portions 6 can be omitted. Instead of the groove portions 6 or in conjunction with the groove portions 6, when the foregoing coating layer is provided on a drinking spout 5 side of the top lid portion 2, it is possible to inhibit the content from spreading out on the top lid portion 2 after the content is ingested from the drinking spout 5. Furthermore, when the shape of the drinking spout 5 is, as illustrated in Fig. 2(d), a shape where a part of the drinking spout 5 protrudes toward a peripheral edge of the top lid portion 2, it is possible to inhibit the content from spreading out on the top lid portion 2.

A sticker indicating the content may be affixed or printed on the top lid portion 2, and a sticker of the face of a human or an animal may be affixed or printed. In this case, when the drinking spout 5 is provided to correspond to the mouth of the human or the mouth of the animal, the user can enjoy the pleasure of kissing when the user ingests the content. In addition, a half the face may be printed on the tapered portion 3 and the remaining part of the face may be printed on the tapered portion 21 of the container 20, so that when the paper lid 1 is correctly mounted, the printed face is visible.

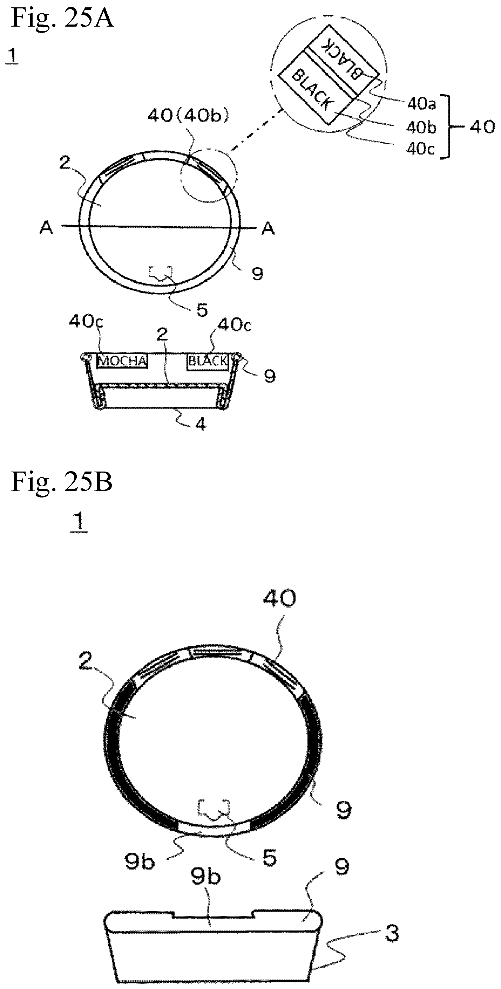

Fig. 25(a) is a schematic view, a partial enlarged view, and an A-A cross-sectional view illustrating a display portion 40 of the paper lid 1. Incidentally, the partial enlarged view illustrates a state where in order to facilitate understanding, an inside and an outside of a peripheral wall of the paper lid 1 are developed.

Characters, symbols, patterns, or figures are printed on the display portion 40 to identify the content of the container 20. As described above, since the paper lid 1 is made of a paper material, printing can be easily performed. In addition, it is possible to identify whether the content is hot or cold by printing a background color on the display portion 40. For example, a hot beverage may identified by printing a red color as the background color, and a cold beverage may be identified by printing a light blue color as the background color. In addition, the user can be also reminded of the content by the background color. For example, a black color may be printed as the background color for a black coffee, an orange color may be printed for an orange juice, and a white color may be printed as the background color for a milk. Incidentally, when the background color is a black color, characters, symbols, patterns, or figures may be outlined.

As illustrated in the partial enlarged view, the display portion 40 includes an outside display portion 40a that is printed to correspond to the outside of the peripheral wall of the paper lid 1, a curl display portion 40b that is printed to correspond to the curl portion 9, and an inside display portion 40c that is printed to correspond to the inside of the peripheral wall of the paper lid 1. Incidentally, the peripheral wall is formed on an outer periphery of the top lid portion 2, and extends to the curl portion 9 to be connected to the curl portion 9.

A plurality of content candidates are printed as characters on the outside display portion 40a on the outside of the peripheral wall of the paper lid 1 such that mainly a side serving a content can recognize the content. As one example, the content candidates are a mocha coffee and a black coffee. Incidentally, when the number of characters is limited due to the space of the peripheral wall of the paper lid 1, an abbreviation may be printed, and when the content is cappuccino, CAPP may be printed.

The curl display portion 40b is displayed in connection with at least one of the outside display portion 40a and the inside display portion 40c. For example, the side serving a content confirms a content of the container 20 among the plurality of content candidates and modifies the curl display portion 40b in connection with the outside display portion 40a indicating the content of the container 20, so that other persons (for example, a user or clerks other than himself or herself) can identify the content. Since the curl portion 9 is easily modified by pressing or bending the curl portion 9 with the fingers, even when a writing instrument is not used, the other persons can identify the content.

For this reason, it is preferable that the curl display portion 40b is a linear line or a curved line. For example, the curl display portion 40b is a plurality of curved lines, and the shape of the curved line is deformed due to pressing from above, to become different from the shapes of the curved lines that are not pressed. For this reason, the other persons can identify the content based on a modification of the curl portion 9 or a modification of the print. Incidentally, when characters are printed on the curl display portion 40b, since the curl portion 9 is deformed into a planar shape when the curl portion 9 is pressed from above, the printed character is seen large and is greatly different in size from the characters that are not pressed; and thereby, it is possible to identify the content. Incidentally, the curl portion 9 is not limited to being deformed by pressing from above, and the curl portion 9 may be bent inward or may be bent outward. In this case, a cut may be provided in the curl portion 9 or the peripheral wall of the paper lid 1.

In addition, a modification such as drilling a hole in the curl portion 9 or the peripheral wall using a hole drilling tool may be performed. In addition, when a rule where a content is identified by a modification of the curl portion 9 is determined, the print of the curl display portion 40b may be omitted.

As described above, it is possible to recognize a content by physically modifying the curl portion 9.

The plurality of content candidates are printed as characters on the inside display portion 40c on the inside of the peripheral wall of the paper lid 1 such that mainly the user can recognize the content. For this reason, it is preferable that the inside display portion 40c is provided together with the curl display portion 40b at a position where the user can see the inside display portion 40c from the drinking spout 5. Specifically, when the drinking spout 5 is on a lower side, it is preferable that the inside display portion 40c is provided at the upper right (first quadrant) or the upper left (second quadrant) of the paper lid 1.

Incidentally, it is preferable that the outside display portion 40a, the curl display portion 40b, and the inside display portion 40c are provided in connection with each other; however, since the side serving a content may be able to recognize the content, the outside display portion 40a may be provided independent of the inside display portion 40c, and can be provided at a random position on the outside of the peripheral wall of the paper lid 1. Incidentally, from the viewpoint of facilitating printing, it is preferable that the printing of the display portion 40 including the curl display portion 40b is performed before the curl portion 9 is formed.

Incidentally, the display portion 40 may be formed as a sticker instead of printing. In addition, the top lid portion 2 may be provided with a mark related to a display of the outside display portion 40a or the inside display portion 40c. In this case, the mark may be drawn on the top lid portion 2 by a writing instrument.

In addition, in Fig. 25(a), the display portions 40 are provided at two places; however, the display portions 40 may be provided at three or more places. In addition, in Fig. 25(a), a gap is provided between the two display portions 40; however, the length of the gap is a random length, and a plurality of the display portions 40 may be provided without gaps therebetween. Fig. 25(b) is a view illustrating an example where three display portions 40 are provided without gaps therebetween, and is a schematic view illustrating the display portions 40 of the paper lid 1 and is a front view of the paper lid 1. In Fig. 25(b), a step portion 9b is formed in the curl portion 9 to correspond to the drinking spout 5. In addition, the curl portion 9 excluding the display portions 40 and the step portion 9b is colored. The coloring of the step portion 9b and the curl portion 9 will be described in a fifth embodiment to be described later.

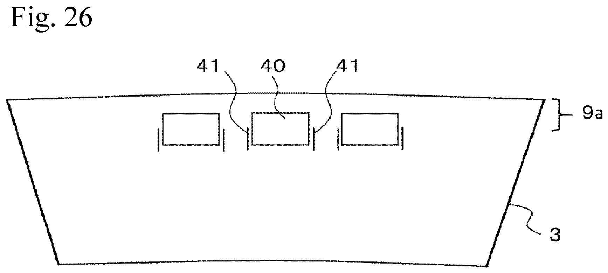

When a part of the curl portion 9 and the peripheral wall of the paper lid 1 is to be modified, as described above, a cut may be provided in the curl portion 9 or the peripheral wall of the paper lid 1. Fig. 26 is a development view of the paper lid 1 excluding the top lid portion 2, and illustrates an example where cut portions 41 are formed on the periphery of the display portion 40. When the cut portions 41 are formed between the plurality of display portions 40 as illustrated in Fig. 25(a), two cut portions 41 are required for one display portion 40, and when three display portions 40 are provided, six cut portions 41 are formed. On the other hand, when the three display portions 40 are provided without gaps therebetween as illustrated in Fig. 25(b), the cut portions 41 for the display portion 40 at the center can be also used as the cut portions 41 for the display portions 40 on the right and the left. For this reason, when the three display portions 40 are provided, four cut portions 41 are formed.

As illustrated in Fig. 26, the paper lid 1 excluding the top lid portion 2 has a fan shape, and both right and left ends are joined to each other and a curl portion forming region 9a of an upper end portion is curled to form the curl portion 9. Then, the paper lid 1 is obtained by joining the top lid portion 2, which is a separate member, thereto. In addition, joining parts at the both right and left ends become a seam, and the content from the container 20 is prone to leak from the seam. Incidentally, the details of a measure against the leakage from the seam will be described later.

Since a tip of the curl portion forming region 9a is rolled inward of the curl portion 9, even when the printing of the curl display portion 40b is performed, the curl display portion 40b is not visible. For this reason, the printing of the curl display portion 40b may not be performed on the tip of the curl portion forming region 9a. In addition, the curl portion forming region 9a requires the rigidity to form a curl, and it is not appropriate to form the cut portions 41 in the curl portion forming region 9a before the curl portion 9 is formed. For this reason, it is preferable that the cut portions 41 are provided away from the curl portion forming region 9a outside both ends of the display portion 40. After the curl portion 9 is formed, cuts may be provided in the curl portion 9 such that a region including the display portions 40 can be bent inward or outward.

Incidentally, from the viewpoint of facilitating the production, it is preferable that the cut portions 41 are formed after the display portions 40 are printed; however, the present invention is not limited thereto. Furthermore, the cut portions 41 may be formed after the curl portion 9 is formed. In addition, the cut portion 41 may be formed as a half-cut, may be formed discontinuously, or may be provided only on one side of the display portion 40.

When the display portion 40 is bent inward, the print of the outside display portion 40a is visible, and when the display portion 40 is bent outward, the print of the inside display portion 40c is visible. As described above, when a display of the display portion 40 is confirmed by bending the display portion 40, as illustrated in the partial enlarged view of Fig. 25(a), the prints of the outside display portion 40a and the inside display portion 40c are not required to be reversed in direction, and the outside display portion 40a and the inside display portion 40c may be printed in the same direction.

Accordingly, the user can see the content of the container 20 by bending the display portion 40 corresponding to the content of the container 20.

Incidentally, it is preferable that the cut portion 41 is formed to not reach the top lid portion 2. This is to prevent the content from the container 20 from leaking from the cut portion 41. In addition, the content may be visible in connection with a display of the display portion 40 by not only bending the cut portion 41 but also modifying the curl portion 9, in which the cut portion 41 is formed, by pressing. In addition, as described above, since the curl portion 9 is modified into a planar shape by pressing from above, the visibility of the characters, the marks, or the figures printed on the curl display portion 40b is improved.

In regard to the size of the drinking spout 5, as one example from the viewpoint of the ease of drinking, a width W1 is from 10 mm to 25 mm, preferably from 15 mm to 22 mm, and a length L1 is from 10 mm to 25 mm, preferably from 14 mm to 21 mm. In addition, when the drinking spout 5 is present at an outer peripheral end (peripheral wall part) of the top lid portion 2, since drinking becomes difficult, a length L2 from the outer peripheral end (peripheral wall part) to the drinking spout 5 is set to be from 1 mm to 15 mm, preferably from 4 mm to 12 mm. When the content of the container 20 is a hot beverage and the length L2 is 4 mm or greater, since the temperature of the content decreases while the content travels on the top lid portion 2, it is possible to reduce the risk of a burn when the content is ingested via the outer peripheral end (peripheral wall part). Incidentally, when L2 is shortened to be from 3 mm to 5 mm, it is possible to inhibit the content from spreading out on the top lid portion 2 after the content is ingested from the drinking spout 5.

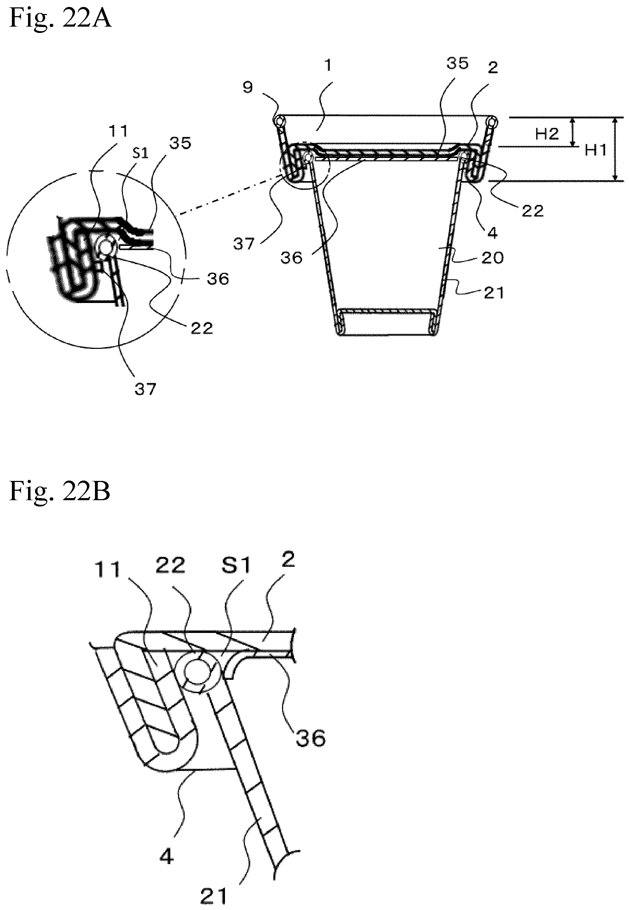

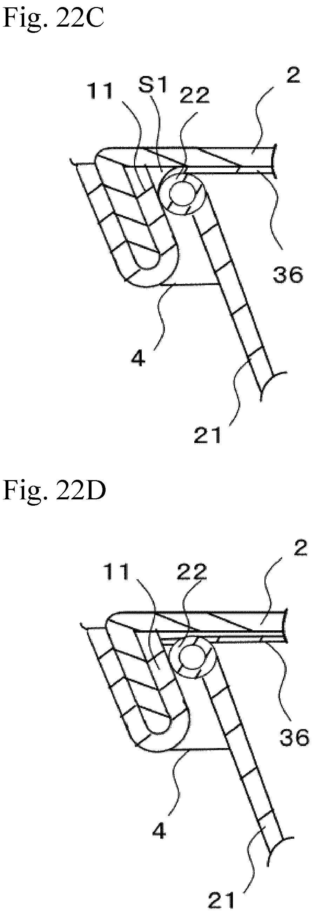

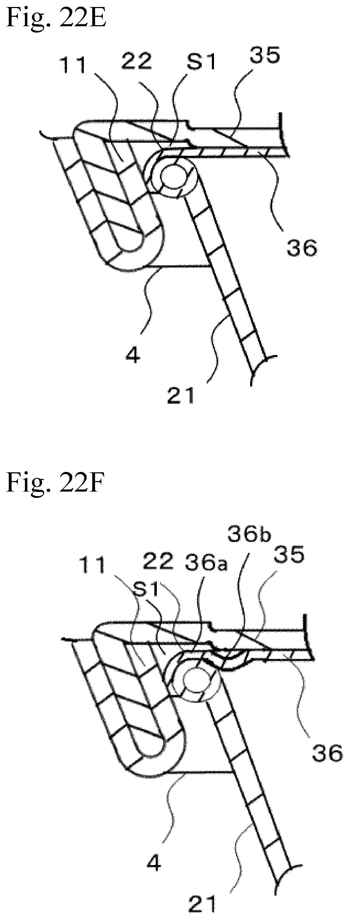

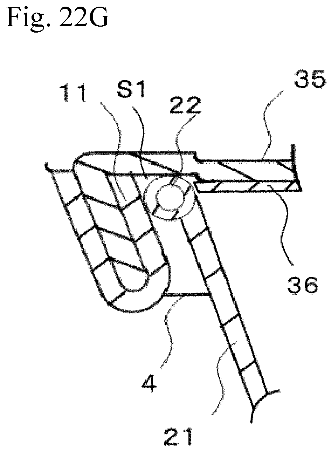

In addition, depending on the setting of a height H2 of the peripheral wall, as will be described later with reference to Fig. 22, the temperature of the content is capable of decreasing while the content travels over the peripheral wall.

When the ease of drinking and the risk of a burn are taken into consideration, a ratio between the length L1 of the drinking spout 5 and the length L2 of the drinking spout 5 may be from 1.1 to 10, preferably from 1.1 to 5.3. Incidentally, the shape of the drinking spout 5 is not limited to the illustrated shape, and may be any shape. In addition, the drinking spout 5 may be provided with the connected portion 5a or the groove portion 6 illustrated in Fig. 2.

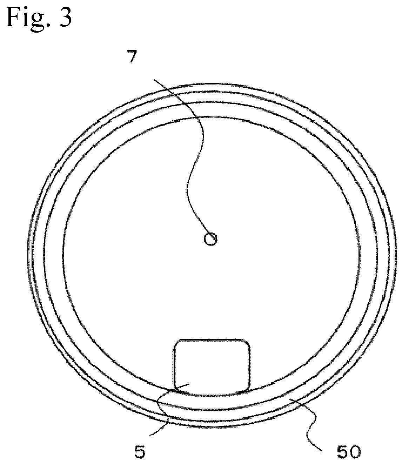

Fig. 3 is a reference view illustrating a plastic lid. The plastic lid in current use is fitted to an outside of the container, and a fitting portion is positioned below the drinking spout 5, so that a lower groove portion 50 is present. When the content is ingested, the content may be spilled from the drinking spout 5 to the lower groove portion 50, so that the usability of the plastic lid is poor. Particularly, an elderly person is prone to spill the content to the lower groove portion 50.

On the other hand, in the present embodiment, the groove portions 6 are present, so that the usability of the paper lid 1 is improved.

Returning to Fig. 2, the air hole portion 7 prevents an incident where when the container 20 is covered with the paper lid 1, the paper lid 1 and the container 20 are tightly fitted to each other to cause a liquid leakage. In the present embodiment, the air hole portion 7 is provided to overlap the groove portion 6. Accordingly, the content accumulated in the sunken portion of the top lid portion 2 is also capable of returning into the container 20 from the air hole portion 7. Incidentally, the air hole portion 7 may be provided away from the groove portion 6. The air hole portion 7 is not limited to only preventing a liquid leakage, and serves as a portion through which air in the container escapes when the container is compressed, to have a function of preventing the paper lid 1 fitted to the container from being removed from the container.

One end of the seal portion 8 is a seal portion 8a that closes the drinking spout 5, and the other end 8b thereof has a function to be described later, and the seal portion 8 is a releasable seal. The seal portion 8 can be made of a waterproof paper such as a paraffin paper, and a waterproof agent such as a paraffin coat, a silicon, or Teflon (registered trademark) may be applied to the paper.

The other end 8b can be used as a pull-up portion when the seal portion 8 is peeled off. Alternatively, the other end 8b may remain joined to the top lid portion 2 when the seal portion 8a is pulled up to peel off the seal portion 8. As illustrated in Fig. 2(b), when an adhesive surface of the seal portion 8a which is to be pulled up is affixed to the tapered portion 21 or the curl portion 22 of the container 20, since the paper lid 1 and the container 20 are joined to each other by the seal portion 8, it is possible to prevent the paper lid 1 from falling off from the container 20 or separating from the container 20; and thereby, it is possible to improve the usability of the paper lid 1.

In addition, a part of an upper side of the curl portion 22 of the container 20 may be collapsed to provide a planar portion, and the planar portion may be joined to a bottom surface of the tapered portion 3 or a bottom surface of the bottom lid portion 4. Ultrasonic sealing, heat sealing, and adhesion can be used as a joining method in this case.

Incidentally, when the other end 8b is pulled up in use, an adhesive agent may not be applied to the other end 8b. On the other hand, when the adhesive surface of the seal portion 8a is affixed to the tapered portion 21 or the curl portion 22 of the container 20, the other end 8b is more firmly bonded thereto than the seal portion 8a. In any case, the adhesive force of the seal portion 8a is different from the adhesive force of the other end 8b.

The container 20 is a paper container including an opening on an upper side thereof, and includes the tapered portion 21, the curl portion 22, and a bottom portion 23. In the present embodiment, since the tapered portion 21 of the container 20 and the tapered portion 3 of the paper lid 1 are tapered reversely to each other, when the paper lid 1 is pushed into the container 20, the sealability between the paper lid 1 and the container 20 is improved; and thereby, even when the container 20 is overturned, it is possible to reduce the risk of spilling the content of the container 20. In addition, various printings can be performed on the paper lid 1. A marker (a line, a mark, or a message) serving as a guide for pushing the paper lid 1 into the container 20 can be printed on the tapered portion 21 (side surface), which will be described later in detail in a third embodiment. In addition, when printing is performed on the sunken portion of the top lid portion 2, the user can easily see the printing, and a description of a product or a description of precautions can be given by printing. In addition, the marker (a line, a mark, or a message) serving as a guide for pushing in the paper lid 1 may be provided on a container 20 side, and a precautionary statement to the effect that "please push in the paper lid 1 to the marker on the container 20 side or until the marker is not visible" may be printed on the sunken portion or the tapered portion 3 of the top lid portion 2. Furthermore, a marker or a message of the paper lid 1 and a maker or a message of the container 20 may be aligned with each other to form a new marker or form a new message. Incidentally, the paper lid 1 of the present invention is not limited to being used for a paper container, and can be used as a lid for various containers such as a plastic container and a foamed plastic container.

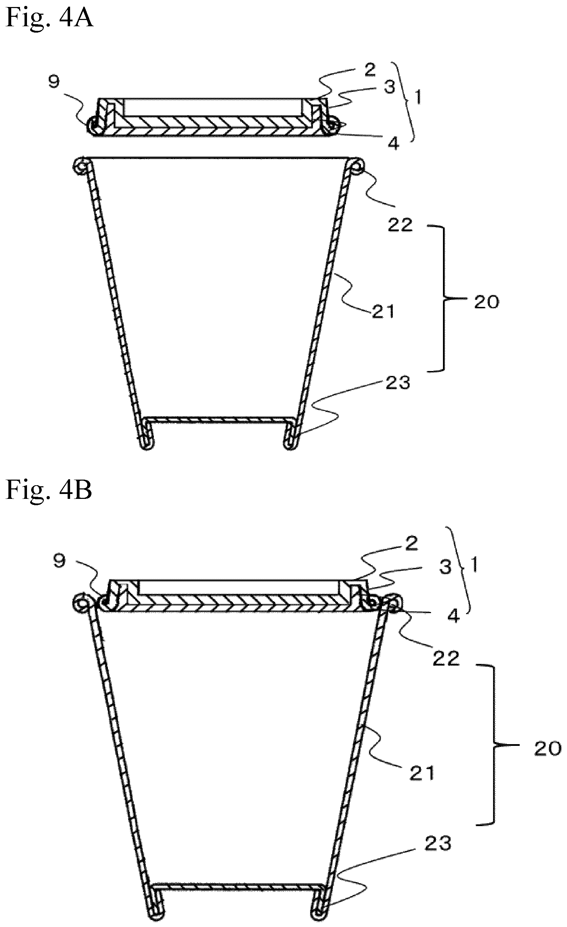

Hereinafter, another lid will be described with reference to Fig. 4. Fig. 4 is a cross-sectional view of the paper lid 1 and the container 20 of a second embodiment. Fig. 4(a) is a cross-sectional view illustrating a state where the paper lid 1 is removed from the container 20, and Fig. 4(b) is a cross-sectional view illustrating a state where the paper lid 1 is fitted to the container 20.

The curl portion 9 is provided also in the paper lid 1. The curl portion 9 may be provided integrally with the paper lid 1, or the curl portion 9 as a separate body may be joined to the paper lid 1. Incidentally, a bent portion may be formed in the curl portion 9, and the shape of the bent portion may be any shape.

The curl portion 9 and the curl portion 22 differ from each other in size, and when the curl portion 9 is made large, it is possible to improve the sealability between the paper lid 1 and the container 20 when the curl portion 9 and the curl portion 22 are fitted to each other. In this case, even when the container 20 is overturned, it is possible to reduce the risk of spilling the content of the container 20.

Incidentally, a part of a lower end of the curl portion 9 may be collapsed to form one planar portion, a part of an upper end of the curl portion 22 may be collapsed to form one planar portion, and the planar portions may be joined to each other to form a hinge portion. In this case, the size of the curl portion 9 may be smaller than the size of the curl portion 22.

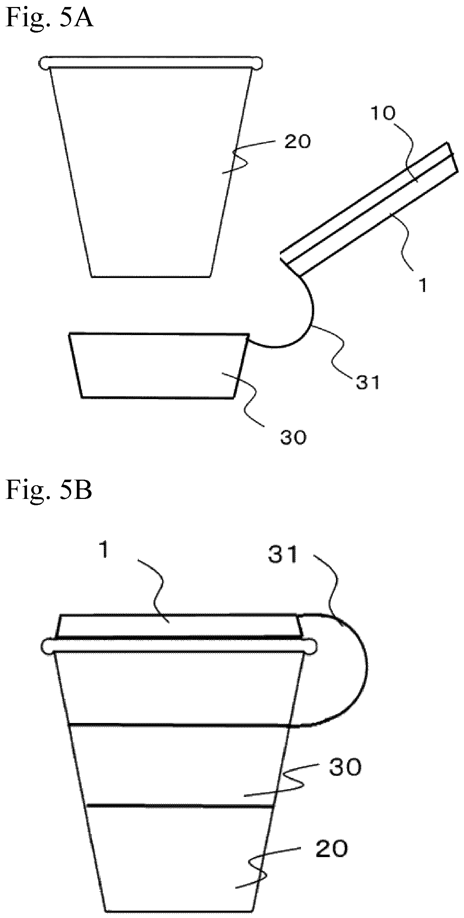

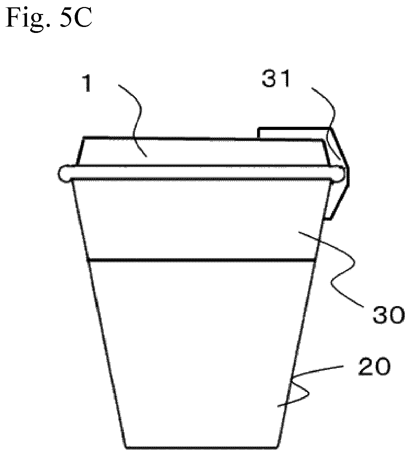

Hereinafter, another lid will be described with reference to Fig. 5. Fig. 5 is a schematic view of the paper lid 1 with a holder 30. Fig. 5(a) is a view illustrating a state where the paper lid 1 is not yet mounted on the container 20, and Figs. 5(b) and 5(c) are views illustrating a state where the paper lid 1 is mounted on the container 20.

The holder 30 is made of a paper material, and is a tapered annular member having the same taper as that of the tapered portion 21 of the container 20. Incidentally, a part of the holder 30 which is a tapered annular member may be cut.

In addition, in order to prevent the container 20 from being accidentally dropped, unevenness may be provided in a surface of the holder 30 by press working or embossing or an anti-slipping agent may be applied thereto.

A hinge 31 is a connection member that connects the holder 30 and the paper lid 1. The hinge 31 is made of a paper material, and one end of the hinge 31 is joined to the taper of the holder 30 and the other end thereof is joined to the paper lid 1. In this case, it is desirable that the other end of the hinge 31 is joined to the sunken portion of the top lid portion 2. Incidentally, the hinge 31 may be bent in several stages such that the hinge 31 has a Z-shape and spring properties. Incidentally, the hinge 31 may be made of a yarn or a cloth.

In addition, a mark 10 serving as a marker for pushing the paper lid 1 into the container 20 is printed on a side surface of the paper lid 1.

Incidentally, various joining methods such as ultrasonic joining, heat sealing, and adhesion can be applied as a method for joining the hinge 31.

The container 20 may have various sizes (an S size, an M size, and an L size), and the diameter of the curl portion 22 or the diameter of the tapered portion 21 differs depending on the size of the container 20. Therefore, in the present embodiment, the size of the paper lid 1 and the size of the holder 30 are set to coincide with each other. For example, when the size of the paper lid 1 is an L size, the holder 30 also has an L size.

Accordingly, a position where the holder 30 is locked to the container 20 is fixed and thus the user does not feel discomfort.

Fig. 5(b) illustrates an example where the holder 30 is positioned in a central portion of the container 20 in the height direction. In addition, the example illustrates a state where the hinge 31 excluding both end portions is not joined to the paper lid 1 and the container 20.

Fig. 5(c) is an example where the holder 30 is positioned in an upper portion of the container 20 in the height direction. In addition, the example illustrates a state where the hinge 31 is attached in contact with the paper lid 1 and the holder 30. In this case, when the hinge 31 is in contact with the side surface of the top lid portion 2 and the sunken portion, the top lid portion 2 can be pressed against the container 20 by the hinge 31. Therefore, it is possible to prevent the paper lid 1 from falling off from the container 20 or separating from the container 20; and thereby, it is possible to improve the usability of the paper lid 1. Also in this case, it is desirable that the paper lid 1 and the container 20 are joined to each other by the seal portion 8.

Incidentally, also in Fig. 5(b), the hinge 31 may be in contact with the paper lid 1 and the container 20.

Incidentally, in the present embodiment, the tapered portion 3 of the paper lid 1 may be the same taper (forward taper) as the tapered portion 21 of the container 20.

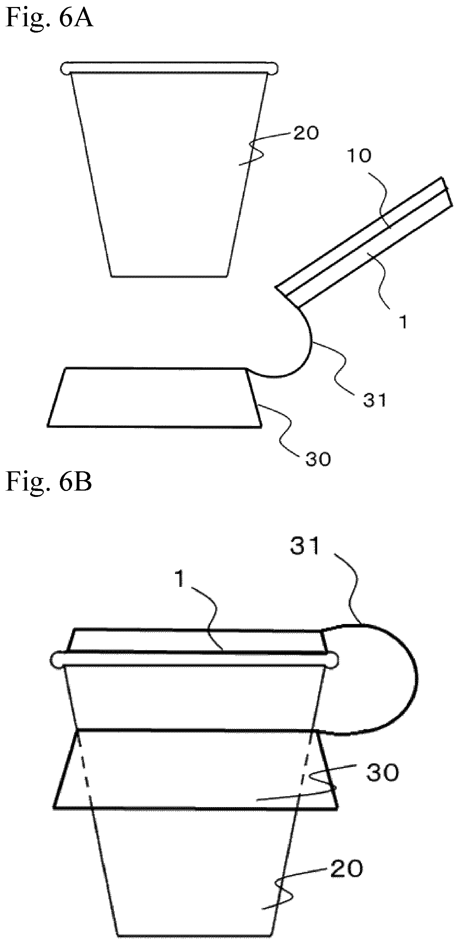

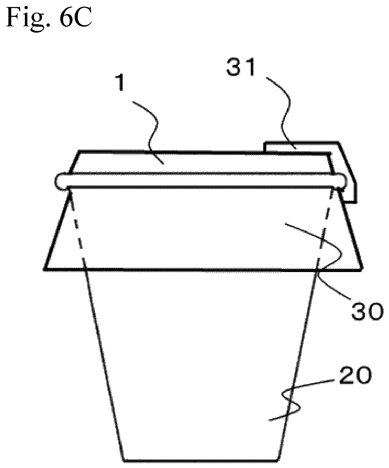

Hereinafter, another lid will be described with reference to Fig. 6. Fig. 6 is a schematic view of the paper lid 1 with the holder 30 in the fourth embodiment. Fig. 6(a) is a view illustrating a state where the paper lid 1 is not yet mounted on the container 20, and Figs. 6(b) and 6(c) are views illustrating a state where the paper lid 1 is mounted on the container 20.

The holder 30 is a tapered annular member having a taper reverse to that of the tapered portion 21 of the container 20. Incidentally, a part of the holder 30 which is a tapered annular member may be cut.

The tapered portion 3 of the paper lid 1 may be the same taper (forward taper) as the tapered portion 21 of the container 20.

In this and the previous lids, since the paper lid 1 and the holder are integrated via the hinge 31, even when the content of the container 20 is hot, the container 20 does not become too hot to be held, and the content of the container 20 does not even cool down.

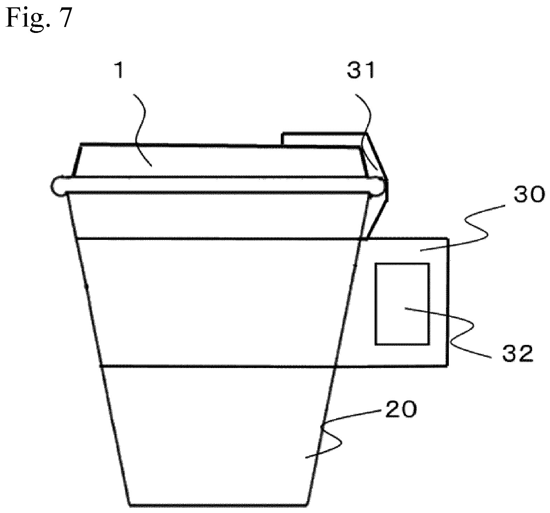

Fig. 7 is a modification example of the paper lid 1 with the holder 30 of the previous embodiment and this embodiment, and illustrates an example where the paper lid 1 is provided with a handgrip and a holder. As illustrated in Fig. 7, the holder 30 is extended in a horizontal direction, and a handgrip is provided by providing an opening portion 32 in an extended part. As described above, since the lid, the holder, and the handgrip are integrally formed, the container 20 can be easily carried on.

Since the paper lids 1 described earlier can be stored or transported in a stacking manner, it is possible to reduce the logistics costs.

Since the paper lids 1 with the holders 30 of the previous embodiment and this embodiment can be stored or transported in a stacking manner, it is possible to reduce the logistics costs.

In addition, in the lid illustrated in the reference view of Fig. 3, when the lid is removed from the container and a drinking spout 5 side is placed on a table, the drinking spout 5 comes into contact with the table, which is not hygienic. On the contrary, when the lid is placed on the table with the drinking spout 5 side down, since the content of the container is on a bottom side of the lid, the content adheres to the table, so that the table needs to be cleaned.

On the other hand, in the paper lid 1 with the holder 30 of the previous embodiment and this embodiment, when the paper lid 1 is removed, the paper lid 1 is held by the holder 30. Therefore, the drinking spout 5 does not come into contact with the table, and the content which adheres to the bottom lid portion 4 due to the tapered portion 3 does not fall onto the table; and thereby, it is possible to improve the usability of the paper lid 1.

(First Embodiment) In the example described previously, the tapered portion 3 is fitted to an inside of the container 20, so that the paper lid 1 is fitted to the inside of the container 20, and continually, an example where the paper lid 1 is fitted to the outside of the container 20 will be described below.

Fig. 8 is a schematic view of the paper lid 1 of the first embodiment. Five examples of the paper lid 1 are disclosed in Figs. 8(a) to 8(e). Hereinafter, the examples of Figs. 8(a) to 8(e) will be sequentially described. Incidentally, in order to simplify the drawings, the drinking spout 5 and the like are not illustrated.

In the paper lid 1 of Fig. 8(a), a second tapered portion 11 which is fitted to an outside of the curl portion 22 is provided. In addition, since the paper lid 1 is fitted to the outside of the container 20, the dimension of the paper lid 1 is larger compared to when the paper lid 1 is fitted to the outside of the container 20. As illustrated in Fig. 8(a), when the second tapered portion 11 is fitted to the curl portion 22, it is possible to reduce the prime cost of the paper lid 1. The paper lid 1 described above is suitable as a lid for the container 20 for a cold beverage.

Incidentally, in Fig. 8, the size of the paper lid 1 is illustrated in an exaggerated manner, and the dimensions of the paper lid 1 are not limited to the illustrated dimensions.

The paper lid 1 of Fig. 8(b) is provided with an engaging portion 12 that is capable of engaging with an inside of the curl portion 22, in addition to the second tapered portion 11. The engaging portion 12 is made of a paper material. The shape of the engaging portion 12 may be any shape such as a circular shape, an oval shape, or a rectangular shape, and is a circular shape in the present embodiment. In the present embodiment, the engaging portion 12 is formed separately from the paper lid 1, and is joined to the paper lid 1 using various joining methods such as adhesion or ultrasonic joining. When joining parts of the paper lid 1 and the engaging portion 12 are coated with films, the paper lid 1 and the engaging portion 12 can be joined to each other by heat sealing.

Since the curl portion 22 is positioned between the second tapered portion 11 and the engaging portion 12, it is possible to reduce the risk that the paper lid 1 is removed from the container 20. For this reason, the engaging portion 12 may not be always in contact with the curl portion 22. For example, when the paper lid 1 is fitted to the container 20 and the second tapered portion 11 is fitted to the curl portion 22, there may be a clearance of approximately 0.1 mm to 1.5 mm between the engaging portion 12 and the curl portion 22. Incidentally, the engaging portion 12 may be shaped to engage with the entire periphery of the curl portion 22, or may be shaped to engage with the curl portion 22 at several places.

In the paper lid 1 of Fig. 8(c), the engaging portion 12 includes a base portion 12a and an engaging part 12b. The base portion 12a and the engaging part 12b may be integrally formed, or after the base portion 12a and the engaging part 12b are separately formed, the base portion 12a and the engaging part 12b may be joined to each other. As illustrated in Fig. 8(c), the engaging part 12b may be capable of engaging with the curl portion 22 at two places, or alternatively, the engaging part 12b may be shaped to engage with the entire periphery of the curl portion 22.

As described above, since the engaging portion 12 includes the base portion 12a and the engaging part 12b, it is possible to reduce the amount of use of the paper material of the engaging portion 12.

In Figs. 8(a) to 8(c), the second tapered portion 11 is illustrated as being tapered forward; however, the second tapered portion 11 may be a reverse taper, and may not be tapered but have a linear shape. In addition, when the paper lid 1 is fitted to the outside of the container 20, the tapered portion 3 may have a linear shape.

In addition, when the curl portion 9 is collapsed in the height direction (in the Z direction), the height of the curl portion 9 is increased, and the distance from the drinking spout 5 formed in the sunken portion is increased; and thereby, it is possible to realize the paper lid 1 that allows easier drinking. It is preferable that the curl portion 9 is from approximately 0.5 mm to 1 mm in a width direction. In addition, when the curl portion 9 is collapsed by press working, it is possible to improve the press workability of the curl portion 9 by heating a part (for example, a lower die holding the paper lid 1) of a press machine to 50°C to 90°C. In addition, when the curl portion 9 is collapsed, since the exterior of the paper lid 1 can be reduced, it is possible to increase the number of the paper lids 1 to be transported, and it is possible to reduce the transportation cost per unit of the paper lids 1.

Incidentally, in Fig. 8(b), the engaging portion 12 and the curl portion 22 engage with each other from the inside of the curl portion 22; however, as illustrated in Fig. 8(d), the engaging portion 12 and the curl portion 22 may engage with each other from above the curl portion 22. In this case, it is desirable that the engaging portion 12 and the curl portion 22 engage with each other inside a center of a curl of the curl portion 22.

Similarly, in Fig. 8(c), the engaging part 12b and the curl portion 22 engage with each other from the inside of the curl portion 22; however, as illustrated in Fig. 8(e), the engaging part 12b and the curl portion 22 may engage with each other from above the curl portion 22. In this case, it is desirable that the engaging portion 12 and the curl portion 22 engage with each other inside a center of a curl of the curl portion 22.

As illustrated in Figs. 8(a) to 8(e), when the curl portion 9 is formed on an upper side of the paper lid 1 and the second tapered portion 11 and the tapered portion 21 are tapered forward, it is preferable that the dimension of the inner diameter of a tip (bottom lid portion 4 side) of the second tapered portion 11 is the same as or slightly smaller than that of the outer diameter of the curl portion 22. Accordingly, when the paper lid is fitted to the container 20, the curl portion 22 is collapsed (modified), so that the paper lid 1 and the container 20 are fitted to each other; and thereby, it is possible to improve the sealability between the paper lid 1 and the container 20.

Incidentally, even when the second tapered portion 11 and the tapered portion 21 are tapered forward, the taper angle of the second tapered portion 11 may be set to be from 3 to 5 degrees and the taper angle of the tapered portion 21 may be set to be from 6 to 7 degrees such that the taper angles are different from each other.

In addition, at least a part (part that engages with the curl portion 22) of an inner peripheral surface of the second tapered portion 11 may not be provided with a coating layer. Accordingly, the paper material of the inner peripheral surface of the second tapered portion 11 engages with the curl portion 22 provided with the coating layer and thus due to the friction of the paper material, the second tapered portion 11 and the curl portion 22 become less slippery; thereby, it is possible to improve the sealability between the paper lid 1 and the container 20. In addition, since the content of the container 20 penetrates through the paper material of the inner peripheral surface of the second tapered portion 11 to cause the second tapered portion 11 to swell, it is possible to improve the sealability between the paper lid 1 and the container 20.

In the reference example illustrated in Fig. 3, since a fitting portion which is fitted to the container 20 is present at the same position as the lower groove portion 50 or below the lower groove portion 50, when the plastic lid is removed from the vicinity of the fitting portion, there is a risk that the content reaches the hand of the user to cause a burn.

On the other hand, in the present embodiment, as described above, since the curl portion 9 is present above a position where the paper lid 1 and the container 20 are fitted to each other, the curl portion 9 or a peripheral wall on the periphery of the curl portion 9 can be held by the hand and then the paper lid 1 can be simply removed from the container 20; and thereby, there is no risk that the content reaches the hand of the user.

In addition, in the reference example illustrated in Fig. 3, since the plastic lid is removed from below the drinking spout 5, there is a risk that the content splashes out from the drinking spout 5 to reach the hand of the user.

On the other hand, in the present embodiment, since the curl portion 9 or the peripheral wall on the periphery of the curl portion 9 which is present above the drinking spout 5 and is formed on the upper side of the paper lid 1 is held by the hand and then the paper lid 1 is removed, there is no risk that the content splashes out from the drinking spout 5 to reach the hand of the user. Incidentally, when the curl portion 9 or the peripheral wall on the periphery of the curl portion 9 is held by the hand and then the paper lid 1 is mounted or removed, from the viewpoint of hygiene, it is desirable that the curl portion 9 in the vicinity of the drinking spout 5 is not touched by a hand. Therefore, as illustrated in Fig. 25(b), when the curl portion 9 excluding the display portions 40 and the step portion 9b is colored, it is possible to call the attention of the user. In addition to that, for example, a precautionary statement to the effect that a colored part of the top lid portion 2 is held and then the paper lid is mounted or removed is desirably printed.

Instead of coloring the top lid portion 2 or in conjunction with coloring the top lid portion 2, the step portion 9b is provided; and thereby, it is possible to inhibit the user from touching the curl portion 9 in the vicinity of the drinking spout 5 by the hand.

Incidentally, when the paper lid 1 is a type where the paper lid 1 is removed and then the content of the container 20 is drunk, the drinking spout 5 can be also omitted.

As illustrated in Figs. 8(a) to 8(e), when the curl portion 9 is formed on the upper side of the paper lid 1, the user puts the mouth on the curl portion 9 to drink the content from the drinking spout 5 formed in the top lid portion 2. This provides the same mouth feel as when the user puts the mouth on the curl portion 22 to drink the content from the container 20 made of a paper. For this reason, the user does not feel discomfort which the user feels when drinking the content from the drinking spout of the plastic lid. In addition, since the tapered portion 3 and the tapered portion 21 are tapered forward, the user can put the mouth on the curl portion 9 to drink the content from the drinking spout 5 at the same angle as when the user drinks the content from the container 20 made of a paper. Accordingly, the user can drink the content from the paper lid 1 with the same mouth feel as when the user drinks the content from the container 20 made of a paper.

### (Second Embodiment)

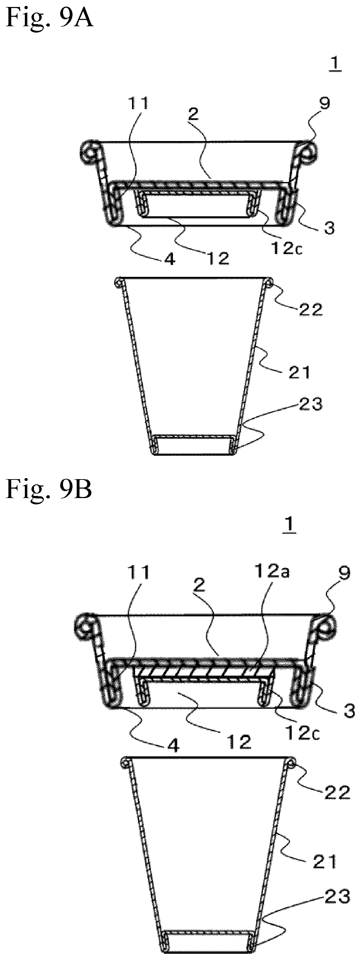

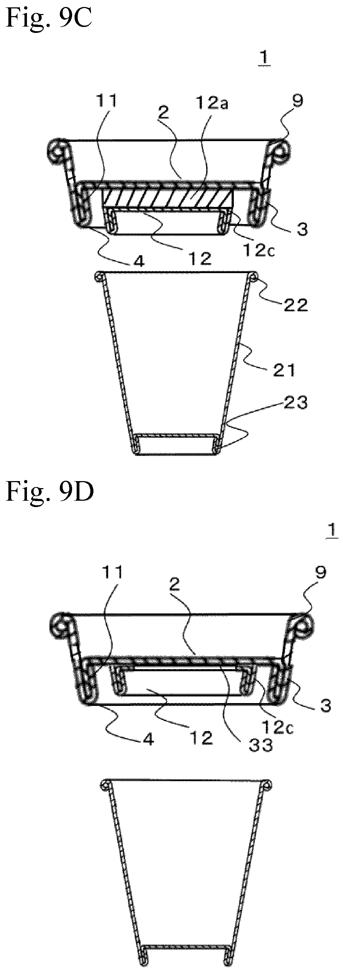

Fig. 9 is a schematic view of the paper lid 1 of a second embodiment, and illustrates, similarly to the first embodiment.

Four examples of the paper lid 1 are disclosed in Figs. 9(a) to 9(d). Hereinafter, the examples of Figs. 9(a) to 9(c) will be sequentially described. Incidentally, in order to simplify the drawings, the drinking spout 5 and the like are not illustrated.

In the present embodiment, the engaging portion 12 is tapered, so that a tapered portion 12c is formed. The tapered portion 12c is the same taper (forward taper) as the second tapered portion 11; however, the tapered portion 12c may be a reverse taper having a different taper direction or may have a different taper angle.

In the paper lid 1 of Fig. 9(a), the tip of the second tapered portion 11 protrudes further toward the container 20 than a tip of the tapered portion 12c such that the second tapered portion 11 starts engaging with the curl portion 22 and then the tapered portion 12c engages with the curl portion 22. In other words, the engaging portion 12 is positioned in a space that is formed inside the second tapered portion 11. For this reason, when the second tapered portion 11 engages with the curl portion 22, the curl portion 22 and an upper portion of the tapered portion 21 receive an inward force. When the tapered portion 12c engages with the curl portion 22 in this state, the curl portion 22 and the upper portion of the tapered portion 21 receive an outward force; and thereby, the paper lid 1 can be firmly fitted to the container 20. As described above, when the taper length of the tapered portion 12c is set to be shorter than the taper length of the second tapered portion 11, the paper lid 1 can be easily removed from the container 20. Also in the foregoing case, since the taper length of the tapered portion 12c is set to be larger than the diameter of the curl portion 22, the paper lid 1 can be reliably fitted to the container 20; and thereby, even when the temperature of the content of the container 20 is high, it is possible to reduce an accident caused by a burn.

Incidentally, a curl portion may be formed in an upper surface of the engaging portion 12, and the engaging portion 12 and the bottom lid portion 4 may be joined to each other by the curl portion.

In the paper lid 1 of Fig. 9(b), the tip of the second tapered portion 11 and the tip of the tapered portion 12c are to be aligned with each other such that the second tapered portion 11 and the tapered portion 12c engages with the curl portion 22 almost at the same time. In the present embodiment, the tip of the second tapered portion 11 and the tip of the tapered portion 12c are aligned with each other by the base portion 12a; however, the size of at least one of the second tapered portion 11 and the tapered portion 12c may be adjusted such that the tip of the second tapered portion 11 and the tip of the tapered portion 12c are aligned each other. As described above, since the tip of the second tapered portion 11 and the tip of the tapered portion 12c are aligned with each other, the paper lid 1 can be fitted to the container 20 in a well-balanced manner.

In the paper lid 1 of Fig. 9(c), the tip of the tapered portion 12c protrudes further toward the container 20 than the tip of the second tapered portion 11 such that the tapered portion 12c starts engaging with the curl portion 22 and then the second tapered portion 11 engages with the curl portion 22. In the present embodiment, the tip of the tapered portion 12c is caused to protrude further toward the container 20 than the tip of the second tapered portion 11 by the base portion 12a; however, the size of at least one of the second tapered portion 11 and the tapered portion 12c may be adjusted such that the tip of the tapered portion 12c protrudes toward the container 20 than the tip of the second tapered portion 11. As described above, since the tip of the tapered portion 12c protrudes further toward the container 20 than the tip of the second tapered portion 11, the second tapered portion 11 can be guided to be fitted to the curl portion 22 by the engagement between the tapered portion 12c and the curl portion 22. Accordingly, the paper lid 1 can be easily fitted to the container 20.

Fig. 9(d) is an example where an opening portion 33 is provided in the upper surface of the engaging portion 12. Due to the opening portion 33, the top lid portion 2 and the engaging portion 12 are joined to each other via only an outer periphery of the engaging portion 12; and thereby, the weight of the engaging portion 12 can be reduced. In addition, an opening portion may be formed also in the top lid portion 2 to reduce the weight of the top lid portion 2.

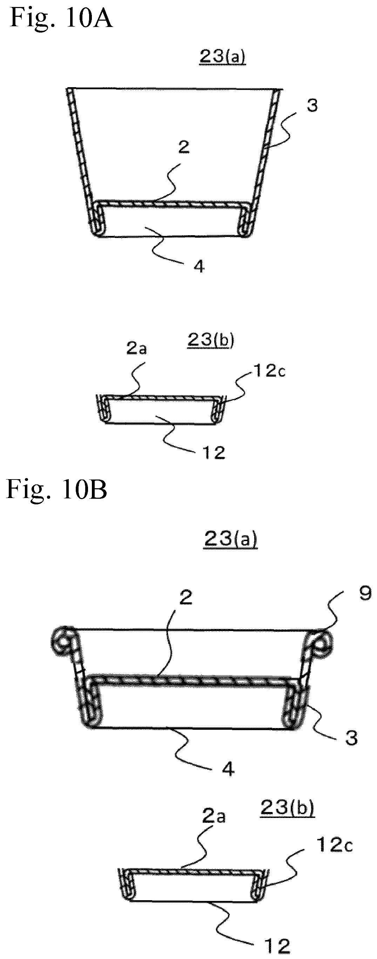

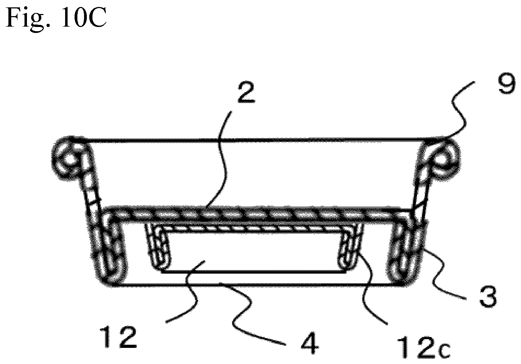

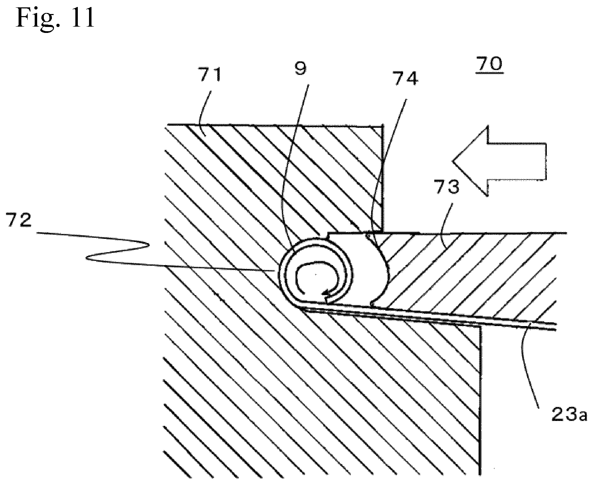

Figs. 10 and 11 are views illustrating a method for producing the paper lid 1 of the second embodiment. Hereinafter, the method for producing the paper lid 1 in the second embodiment will be described with reference to Figs. 10 and 11. Incidentally, the paper lid 1 of the second embodiment is the paper lid 1 that is produced using the bottom portion 23 of the container 20 having a different size; however, the present invention is not limited thereto, and the paper lid 1 can be produced of a paper material by press working or papermaking. In this case, it is possible to improve the press workability of the paper lid 1 by heating at least a part (for example, the lower die holding the paper lid 1) of the press machine to 50°C to 90°C. Incidentally, continually, the paper lid 1 illustrated in Fig. 9(a) will be described as an example.

Fig. 10(a) illustrates two bottom portions 23a and 23b of the container 20, of which the sizes are different from each other. The bottom portion 23a is formed according to the size of the outside (outer diameter) of the curl portion 22. The bottom portion 23b is formed according to the size of the inside (inner diameter) of the curl portion 22. As being apparent from Fig. 10(a), a part of the bottom portion 23a (the top lid portion 2 and the bottom lid portion 4) has a similar shape as that of the bottom portion 23b. For this reason, when the tapered portion 3 serves as a first engaging portion, the tapered portion 12c serves as a second tapered portion, and the paper lid 1 is fitted to the container, even in a case where the container 20 is overturned, it is possible to reduce the risk of spilling the content of the container 20. In addition, the basis weights of the bottom portion 23a and the bottom portion 23b may be the same; however, since the bottom portion 23a requires the strength due to being fitted to the outside of the container 20, it is desirable that the basis weight of the bottom portion 23a is larger than the basis weight of the bottom portion 23b. As one example, the basis weight of the bottom portion 23a is from 200 g/m² to 360 g/m², and the basis weight of the bottom portion 23b is from 150 g/m² to 199 g/m². In this case, when the basis weight of the second tapered portion 11 is 200 g/m² to 360 g/m², and the basis weight of the tapered portion 12c is 150 g/m² to 199 g/m², since the resistance (rigidity) of the tapered portion 12c is reduced, the paper lid 1 is easily removed.

In addition, the bottom portion 23a and the bottom portion 23b may be made of the same paper material, or may be made of different paper materials.

In Fig. 10(b), the curl portion 9 is formed on an upper side of the bottom portion 23a. Fig. 11 is a partial enlarged view of a curl molding die 70. The curl molding die 70 includes an upper die 71, an upper die groove portion 72, a lower die 73, and a lower die groove portion 74. The upper die 71 includes a tip portion which the upper side of the bottom portion 23a is capable of entering. In addition, the upper die 71 includes the upper die groove portion 72 having a curved surface shape. The lower die 73 includes a holding portion that holds the bottom portion 23a, and the lower die groove portion 74 that is opposite to the upper die groove portion 72.

When the lower die 73 holding the bottom portion 23a moves toward the upper die 71, a tip of the bottom portion 23a comes into contact with the upper die groove portion 72, slides on a surface of the upper die groove portion 72 along the curved surface of the upper die groove portion 72, stretches out to be opened outward, is gradually curled, and then comes into contact with the lower die groove portion 74. Accordingly, the upper side of the bottom portion 23a is curled.

Fig. 10(c) illustrates a mode where a top lid portion 2a of the bottom portion 23b is joined to a lower side of the top lid portion 2 of the bottom portion 23a. Various joining methods such as adhesion and ultrasonic joining can be applied as a method for joining the top lid portion 2 and the top lid portion 2a. For example, when joining parts of the top lid portion 2 and the top lid portion 2a are coated with films, since the sunken portion of the top lid portion 2 and a sunken portion of the top lid portion 2a are formed as flat surfaces, the top lid portion 2 and the top lid portion 2a can be joined to each other by heat sealing. Incidentally, it is desirable that the top lid portion 2 and the top lid portion 2a are joined to each other in a state where the centers of the top lid portion 2 and the top lid portion 2a are aligned with each other; however, the present invention is not limited thereto. For example, the centers of the top lid portion 2 and the top lid portion 2a may be eccentric from each other such that the second tapered portion 11 and the tapered portion 12c are tightly fitted to the curl portion 22 in the drinking spout 5 and in the vicinity of the drinking spout 5.

It is possible to produce the paper lid 1 by joining the top lid portion 2 and the top lid portion 2a and then processing the drinking spout 5 or the air hole portion 7.

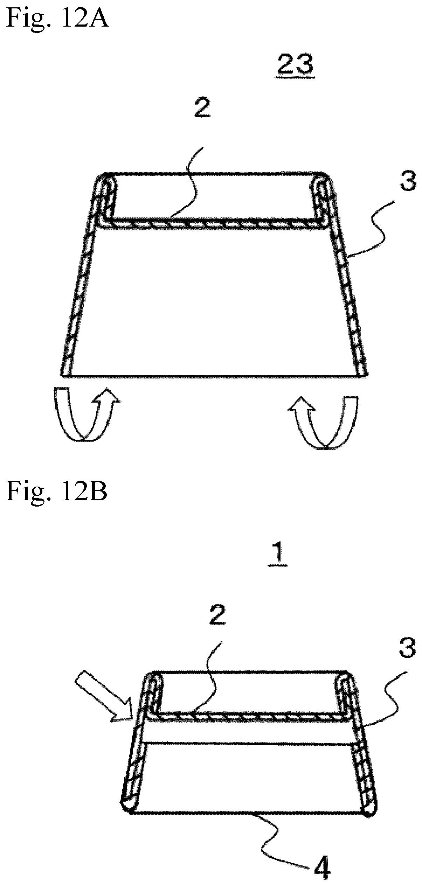

Fig. 12 is a view illustrating another method for producing the paper lid 1. Also in the present embodiment, the paper lid 1 is produced using the bottom portion 23 of the container 20; however, the present invention is not limited thereto, and the paper lid 1 can be produced of a paper material by press working.

In Fig. 12(a), the bottom portion 23 of the container 20 is cut to a predetermined size, and a lower end portion is bent inward as indicated by arrows.

Fig. 12(b) is a view after the lower end portion is bent inward. Since the lower end portion is bent inward, as illustrated in Fig. 12(b), a part where the paper material is double layered and a single-layer part (part indicated by an arrow) are present. When the paper lid 1 is fitted to the container 20, the curl portion 22 of the container 20 is caught and held by the single-layer part. Furthermore, since the tapered portion 3 of the paper lid 1 is fitted to the tapered portion 21 of the container 20, the paper lid 1 can be firmly fitted to the container 20.

In the present embodiment, the tapered portion 3 of the paper lid 1 and the tapered portion 21 of the container 20 are tapered reversely to each other; however, the tapered portion 3 of the paper lid 1 and the tapered portion 21 of the container 20 may be tapered forward, or the tapered portion 3 may have a linear shape. Incidentally, when the lower end portion is bent inward and a protruding portion is provided in an inner surface of the lower end portion or the inner surface is made wavy, the paper lid 1 can be more firmly fitted to the container 20.

Incidentally, the technique where the curl portions are fitted to each other as illustrated in Fig. 4, and the technique where the curl portion and the tapered portion are fitted to each other as illustrated in Figs. 9 and 10 are disclosed in Japanese Patent Application No. 2018-138005, filed on July 23, 2018 based on U.S. Provisional Application No. 62/696895 filed on July 12, 2018 by the applicants of the present application, and the description thereof is as follows. Incidentally, only reference signs of parts having duplicated reference signs are changed.

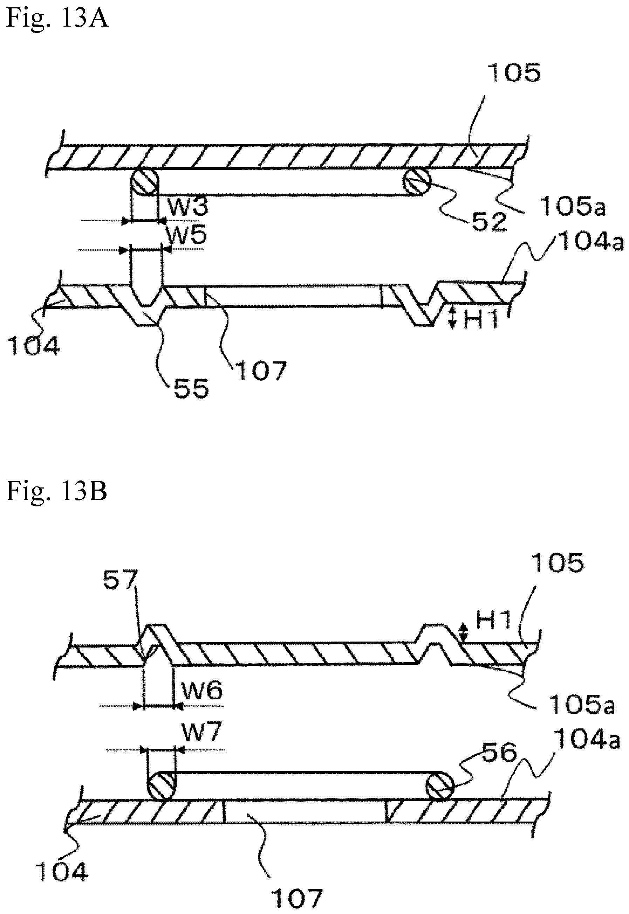

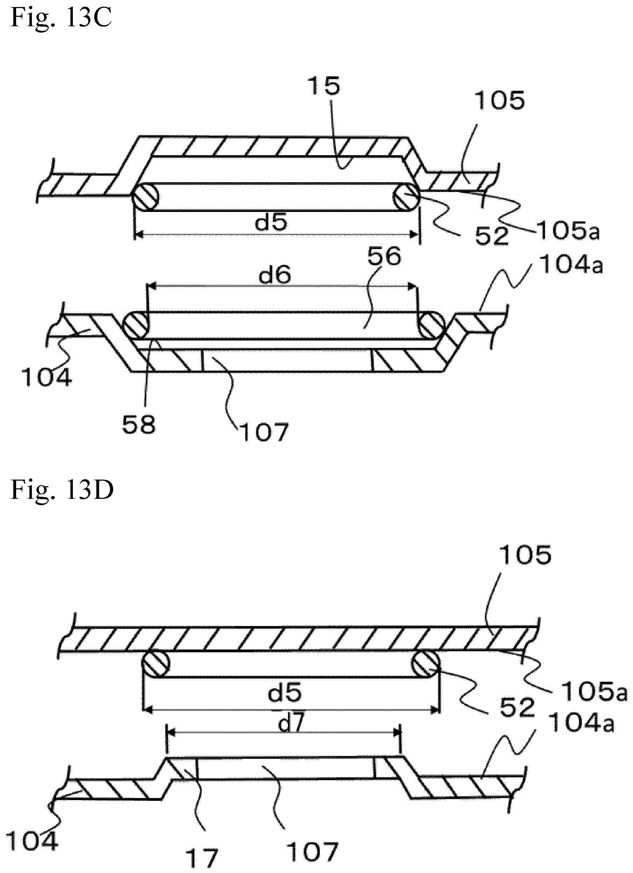

Fig. 13 (Fig. 38 in Japanese Patent Application No. 2018-138005) is a view illustrating other examples of a fitting member using a curl member 52 (56). Fig 13(a) is a view illustrating an example where an attaching portion 104 is provided with a recessed groove portion 55 having a tapered annular shape. The taper of the recessed groove portion 55 having a tapered annular shape is narrowed from an upper surface toward a lower surface of the attaching portion 104. For this reason, a fitting width W5 of the upper surface of the attaching portion 104 is larger (wider) than a fitting width W3 of the curl member 52.

Fig 13(b) is a view illustrating an example where the attaching portion 104 is provided with a curl member 56 and a lid portion 105 is provided with a recessed groove portion 57 having a tapered annular shape. The configuration of the curl member 56 is the same as that of the curl member 52. A width W6 on an opposite surface side of the recessed groove portion 57 having a tapered annular shape, which is opposite to the attaching portion 104, is larger (wider) than a fitting width W7 of the curl member 56.

Fig. 13(c) illustrates an example where the lid portion 105 is provided with a recessed portion 15 of which the peripheral edge is formed into a tapered annular shape, and the curl member 52 is joined to the recessed portion 15 having a tapered annular shape. Since the curl member 52 is joined along a taper surface of the recessed portion 15, the positioning of the curl member 52 can be facilitated. In addition, a part of the curl member 52 protrudes from the recessed portion 15 toward the attaching portion 104.

In addition, Fig. 13(c) illustrates an example where the attaching portion 104 is provided with a recessed portion 58 of which the peripheral edge is formed into a tapered shape, and the curl member 56 is joined to the recessed portion 58 such that the curl member 56 is accommodated in the recessed portion 58. Since the curl member 56 is joined along a taper surface of the recessed portion 58, the positioning of the curl member 56 can be facilitated.

A major diameter d5 of the curl member 52 is larger than an inner diameter d6 of the curl member 56 and when the lid portion 105 is opened, at least one of the curl member 52 and the curl member 56 is elastically deformed, so that the curl member 52 is fitted internally to the curl member 56.

In Fig. 13(d), the attaching portion 104 is provided with a protruding portion 17 of which the periphery has a tapered shape. The major diameter d5 of the curl member 52 is larger than an outer diameter d7 of the protruding portion 17, and when the lid portion 105 is opened, the curl member 52 is elastically deformed, so that the curl member 52 is fitted externally to the protruding portion 17.

Incidentally, in Figs. 13(a) to 13(d), the shapes and the sizes of the curl members 52 and 56, the recessed groove portions 55 and 57, and the recessed portion 58 are preferably set such that an upper surface 104a of the attaching portion 104 and an upper surface 105a of the lid portion 105 come into contact with each other when the lid is open. In addition, a foamable ink or a foamable hotmelt containing a foaming agent may be applied to or foamed in at least a part of the curl members 52 and 56, the recessed groove portions 55 and 57, and the recessed portions 15 and 58. Incidentally, the recessed groove portions 55 and 57, the recessed portions 15 and 58, and the protruding portion 17 can be formed by press working.

As being apparent from the above description, the technique where the curl portions are fitted to each other or the technique where the curl portion and the tapered portion are fitted to each other is disclosed in Japanese Patent Application No. 2018-138005.

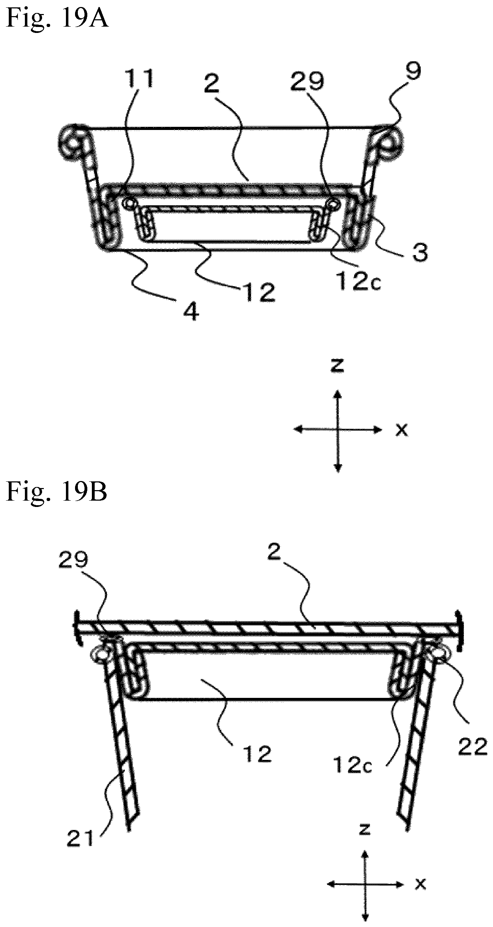

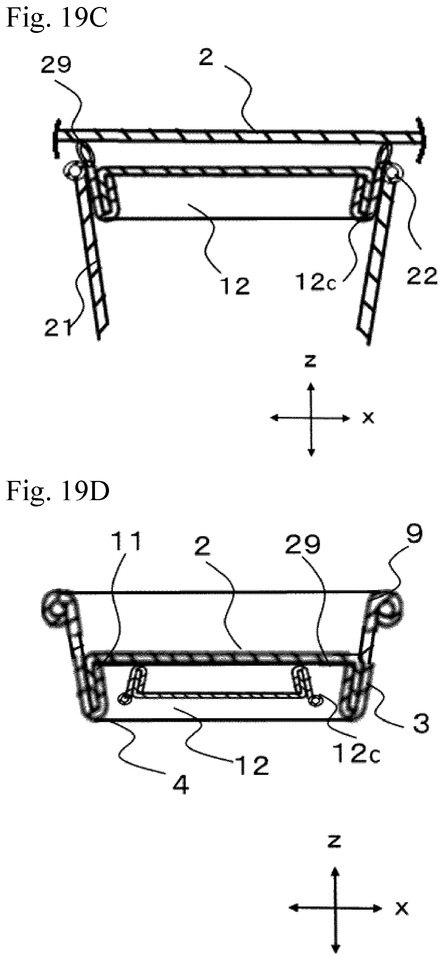

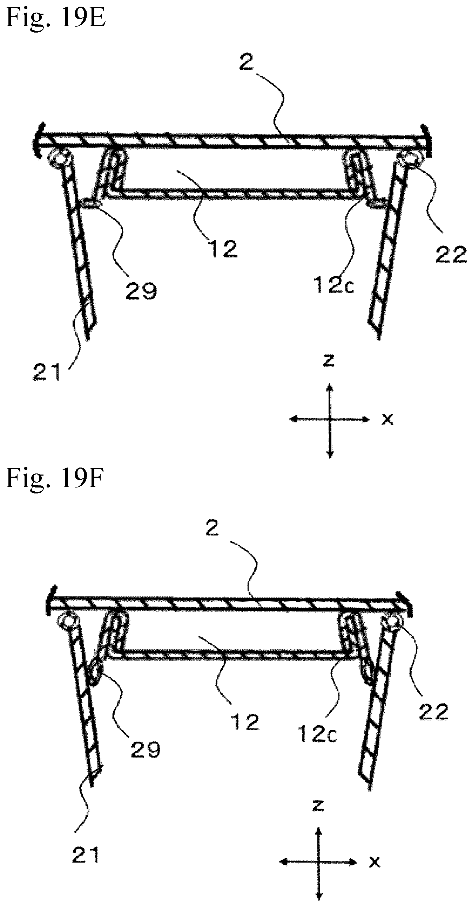

Other forms of fitting can be also applied to the paper lid 1 of the sixth embodiment described above. Fig. 19 is a modification example of the paper lid of the sixth embodiment, and six examples are disclosed in Figs. 19(a) to 19(f) and will be sequentially described. Here, Figs. 19(a) to 19(c) illustrate examples where the tapered portion 12c of the engaging portion 12 and the tapered portion 21 of the container 20 are tapered forward, and Figs. 19(d) to 19(f) illustrates examples where the tapered portion 12c of the engaging portion 12 and the tapered portion 21 of the container 20 are tapered reversely to each other. Incidentally, in order to simplify the drawings, the drinking spout 5 and the like are not illustrated.

In Fig. 19(a), a curl portion 29 is formed in the upper surface of the engaging portion 12, and the engaging portion 12 and the top lid portion 2 are joined to each other by the curl portion 29. Since the curl portion 29 and the curl portion 22 of the container 20 are fitted to or engage with each other, the second tapered portion 11 and the curl portion 22 are fitted to or engaged with each other, and the tapered portion 12c of the engaging portion 12 and an inner surface of the tapered portion 21 of the container 20 are fitted to each other, even when the container 20 is overturned or is severely inclined, it is possible to improve the sealability between the paper lid 1 and the container 20 since the fitting or the engagement at the foregoing three places and both are used; and thereby, it is possible to reduce the risk of spilling the content of the container 20.

Fig. 19(b) illustrates an example where the curl portion 29 is collapsed along a Z-axis to be extended in an X-axis direction of the same drawing. As described above, since it is possible to increase a joining area between the curl portion 29 and the top lid portion 2 by flattening and lengthening the curl portion 29 horizontally, the engaging portion 12 can be reliably joined to the top lid portion 2. In addition, since a contact area between the curl portion 29 and the curl portion 22 can be increased, it is possible to reduce the risk of spilling the content of the container 20. Incidentally, the curl portion 29 can be collapsed along the Z-axis to be extended in the X-axis direction by press working.

Fig. 19(c) illustrates an example where the curl portion 29 is collapsed along an X-axis to be extended in a Z-axis direction of the same drawing. As described above, since the curl portion 29 is lengthened vertically, a space is formed between a lower surface of the top lid portion 2 and an upper surface of the bottom lid portion 4 and the space serves as a heat insulating portion; and thereby, it is possible to improve the heat retention of the content in the container 20. In addition, since a contact area between the curl portion 29 and the curl portion 22 can be increased, it is possible to reduce the risk of spilling the content of the container 20. Incidentally, the curl portion 29 can be collapsed along the Z-axis to be extended in the X-axis direction by press working. The curl portion 29 serves as a packing, and accordingly, it is possible to reduce the risk of spilling the content of the container 20.

Fig. 19(d) illustrates an example where the engaging portion 12 illustrated in Fig. 19(a) is joined to the top lid portion 2 in a state where the engaging portion 12 is turned upside down. Accordingly, the tapered portion 12c of the engaging portion 12 and the tapered portion 21 of the container 20 are tapered reversely to each other.

When the tapered portion 12c and the tapered portion 21 are tapered reversely to each other, since the tapered portion 12c and the tapered portion 21 when fitted to each other are not in surface contact but in point contact (line contact), a fitting force is exerted on a fitting portion in a more concentrated manner compared to the case of surface contact. For this reason, the fittability of the tapered portion 12c and the tapered portion 21 is improved, and thus the sealability of the paper lid 1 is improved. In addition, since the tapered portion 12c and the tapered portion 21 are made of a paper material, the tapered portion 12c and the tapered portion 21 are deformed due to fitting, to form a slight planar portion. The planar portion improves the fittability of the tapered portion 12c and the tapered portion 21. In addition, since a fitting length is shorter due to the tapered portion 12c and the tapered portion 21 being in point contact (line contact) compared to when the tapered portion 12c and the tapered portion 21 are tapered forward, also when the paper lid 1 is removed from the container 20, the paper lid 1 can be simply removed.

Fig. 19(e) illustrates an example where the curl portion 29 is collapsed along the Z-axis to be extended in the X-axis direction of the same drawing. As described above, since the curl portion 29 is flattened and lengthened horizontally, it is possible to reduce the size of places where the tapered portion 12c and the tapered portion 21 are fitted to each other compared to the example of Fig. 19(d).

Fig. 19(f) illustrates an example where the curl portion 29 is collapsed along the X-axis to be extended in the Z-axis direction of the same drawing. As described above, since the curl portion 29 is lengthened vertically, it is possible to increase the size of places where the tapered portion 12c and the tapered portion 21 are fitted to each other compared to the example of Fig. 19(d). When the tapered portion 12c and the tapered portion 21 are tapered reversely to each other and the sizes of fitting parts of the curl portion 29 and the tapered portion 21 are appropriately set, it is possible to realize the paper lid 1 with good usability.

Incidentally, the paper lid 1 of the fourth embodiment and the fifth embodiment may be a paper lid with the holder 30.

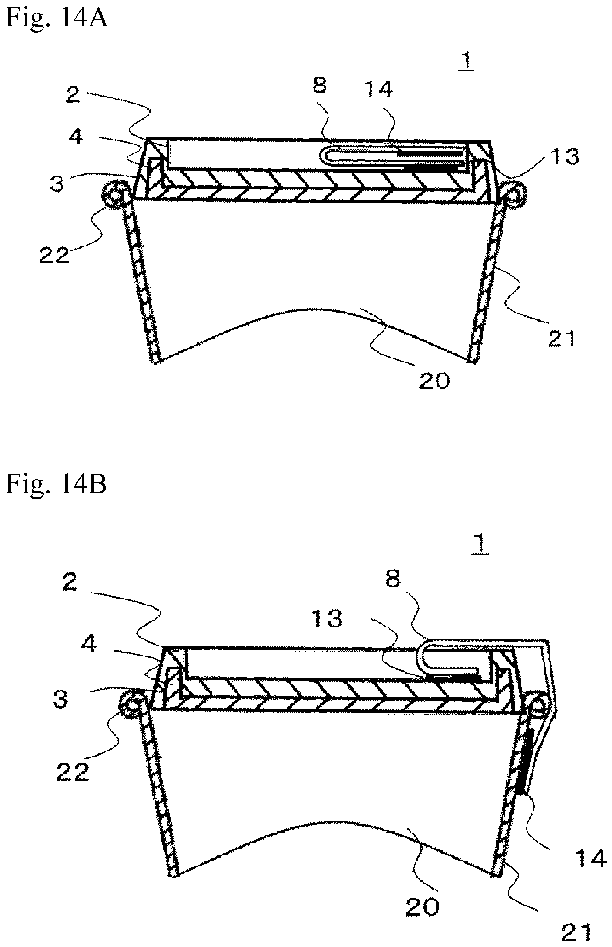

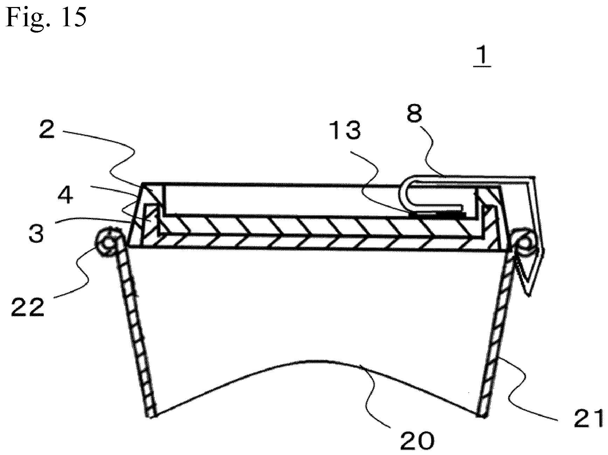

In addition, various modifications can be also made thereto. Hereinafter, modification examples of the seal portion 8 of Fig. 2 will be described with reference to Figs. 14 and 15. In Fig. 14(a), the seal portion 8 is bent into a C-shape, and is joined to the sunken portion of the top lid portion 2 by an adhesive 13 applied to a lower surface side of the seal portion 8. In addition, an adhesive 14 is applied to an upper surface side of the seal portion 8. Incidentally, it is desirable that the adhesive 14 is a releasable adhesive.

Fig. 14(b) illustrates a mode where one end of an upper surface of the seal portion 8 is pulled and the one end of the upper surface of the seal portion 8 and the tapered portion 21 of the container 20 are joined to each other by the adhesive 14. As described above, since the paper lid 1 and the container 20 are joined to each other using the seal portion 8, it is possible to prevent the paper lid 1 from falling off into the container 20. Incidentally, in Fig. 14, the adhesive 14 is applied up to an end portion of the upper surface of the seal portion 8; however, it is desirable that the adhesive 14 is applied off from the end portion of the upper surface such that the adhesive 14 dose not adhere to the hand. In the present embodiment, the adhesive force of the adhesive 13 is larger than the adhesive force of the adhesive 14. Instead of the foregoing manner or in conjunction therewith, it is preferable that the coating amount of the adhesive 13 is larger than the coating amount of the adhesive 14. Incidentally, the lower surface of the seal portion 8 and the sunken portion of the top lid portion 2 may be joined to each other by heat sealing instead of the adhesive 13.

Fig. 15 illustrates an example where the adhesive 14 of the paper lid 1 in Fig. 14 is omitted, and instead of the adhesive 14, the end portion of the upper surface of the seal portion 8 engages with the curl portion 22 to prevent the paper lid 1 from falling off into the container 20. The end portion of the upper surface of the seal portion 8 has a V-shape so as to engage with the curl portion 22. In order to maintain a V-shape, it is desirable that valleys of the V-shape are joined to each other by various joining methods such as adhesion, heat sealing, ultrasonic joining, and high-frequency joining.

Incidentally, the seal portion 8 of Figs. 14 and 15 may be a seal that covers the drinking spout 5, or may be a seal that is separate from a seal covering the drinking spout 5. When the drinking spout 5 is covered with the seal portion 8, it is desirable that the adhesive 13 is not provided in a part of the seal portion 8 which is opposite to the drinking spout 5 and on the periphery of the part.

### (Third Embodiment)

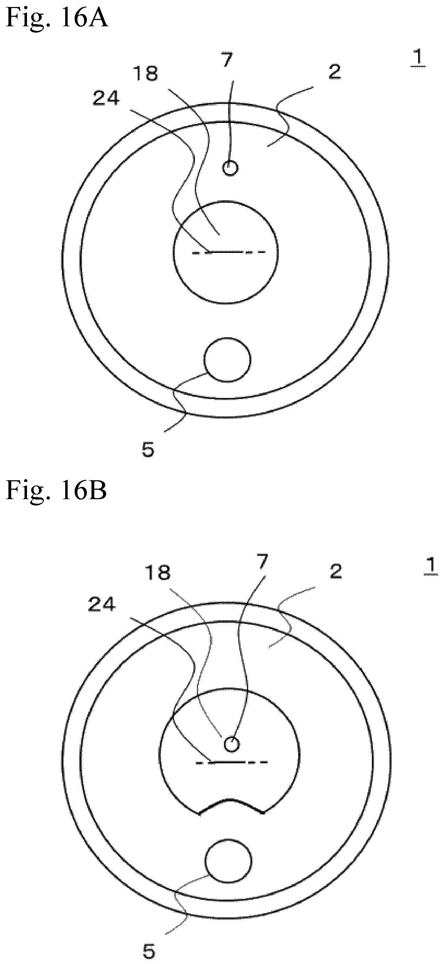

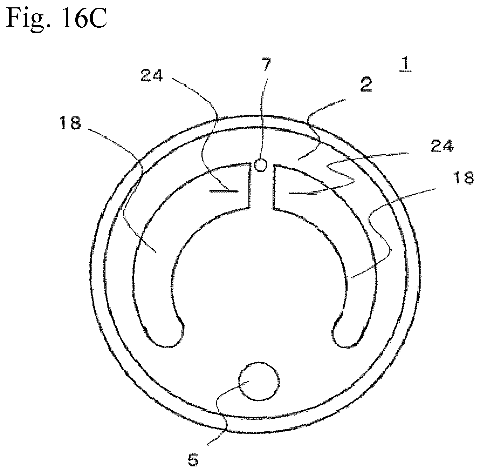

Fig. 16 is a schematic view of the paper lid 1 of a third embodiment. Incidentally, in order to simplify the drawings, the seal portion 8 illustrated in Fig. 2 is not illustrated. In the present embodiment, a window portion 18 through which the content of the container 20 is visible, and the window portion 18 is provided with a cut portion 24. Incidentally, the window portion 18 can be formed in the sunken portion of the top lid portion 2.

Fig. 16(a) illustrates the window portion 18 having a circular shape; however, the shape or the size of the window portion 18 may be any shape or size as long as the content of the container 20 is visible therethrough. In addition, as illustrated in Fig. 16(b), the window portion 18 may be shaped to not interfere with the drinking spout 5.

In the present embodiment, the window portion 18 is a transparent member, and can be made of various films (including a biodegradable film) such as a polypropylene film and a polyethylene film. In addition, the transparent member may be made of cellulose nanofibers, and the paper lid 1 may be made of cellulose nanofibers.

The window portion 18 can be formed by forming an opening portion in a paper material, and joining a film as a coating layer to the opening portion to cover the opening portion using various joining methods such as heat sealing and an adhesive. In this case, the film may be joined to a single surface side (for example, an upper surface side) of the paper material, or two film rolls are provided and joined to both sides (the upper surface side and a lower surface side). In addition, a film formed by T-die molding where a molten resin is extruded from a slit to form a thin film can be joined to the paper material. In this case, since the molten resin is used, when the paper material and the film are pressed by a pair of pressing rollers, the resin may adhere to a film side pressing roller. For this reason, it is preferable that the film side pressing roller is made of Teflon (registered trademark) or silicon. In addition, it can be considered that the pair of pressing rollers is heated in order to improve the joinability between the paper material and the film. Also in this case, in order to avoid the adhesion of the resin to the film side pressing roller, it is preferable that a paper material side pressing roller is heated. The air hole portion 7 may be formed at a position different from that of the window portion 18 as illustrated in Fig. 16(a), or may be formed in the window portion 18 as illustrated in Fig. 16(b). Incidentally, when the paper lid 1 is for a cold beverage, the air hole portion 7 may be omitted. In addition, when the paper lid 1 is for a cold beverage, the top lid portion 2 may not be made of a paper material but be made of a film through which the content of the container 20 is visible, and a cut into which a straw is inserted may be formed in the film.

The cut portion 24 is a portion into which a straw is inserted. In the present embodiment, the cut portion 24 includes a cut indicated by a solid line, and half-cuts that are indicated by dotted lines and are formed at both ends of the cut; however, the cut portion 24 may include only the cut or only the half-cuts. Incidentally, when the paper lid 1 is for a hot beverage, the cut portion 24 may be omitted. The width of the cut portion 24 can be from approximately 0.3 mm to 1 mm. In a state where the film of the window portion 18 is stretched, in a case where a cutter is put in the film and a cut capable of communicating with the container 20 side is provided, when the cutter is pulled out, the width of the cut becomes narrower due to the elasticity of the film, and the width of the cut becomes narrower toward the container 20 side. For this reason, in a state where a straw is not yet inserted, even when the paper lid 1 is fitted to the container 20 and the container 20 is turned upside down, there is almost no leakage of the content from the cut portion 24, and even when the container 20 is accidentally overturned, the content does not leak from the paper lid 1. Incidentally, the cut portion 24 may be cross hairs, radial lines, or a curved line (for example, an S-shape).

Since the cut is formed as described above, the straw can be easily inserted into the cut portion 24. Furthermore, in the present embodiment, since the half-cuts are formed at the both ends of the cut, when a straw having a large diameter is inserted, half-cut parts are ruptured. For this reason, straws from a straw having a small diameter to a straw having a large diameter can be easily inserted into the cut portion 24 of the present embodiment.

Fig. 16(c) illustrates an example where the window portions 18 are provided at two places (a plurality of places), and the cut portions 24 are also provided at two places (a plurality of places). However, the cut portion 24 may be provided at one place. It is possible to improve the visibility by bisymmetrically providing the two window portions 18, and it is possible to improve the visibility by providing the two window portions 18 at positions that are offset from the center of the top lid portion 2.

In the examples of Figs. 16(a) to 16(c), it is desirable that the area of the window portion 18 is from approximately 5% to 50% of the area of the top lid portion 2. When the size of the window portion 18 is less than 5% of the area of the top lid portion 2, the visibility deteriorates. When the size of the window portion 18 exceeds 50% of the area of the top lid portion 2, the amount of use of the film is increased, which is not preferable from the viewpoint of environment. Incidentally, when a biodegradable film is used, the size of the window portion 18 may exceed 50% of the area of the top lid portion 2.

In addition, press working may be performed on the periphery of the window portion 18, in which the cut portion 24 is not formed, to improve the strength of the window portion 18.

Incidentally, when the display portion 40 or the cut portion 41 described above is provided in conjunction with the formation of the window portion 18, it is possible to more easily see the content of the container 20.

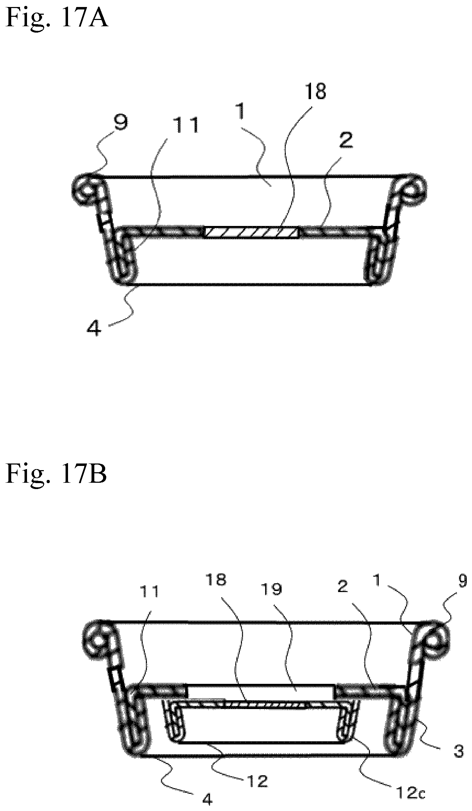

Fig. 17 is a cross-sectional view of the paper lid 1 of the third embodiment, Fig. 17(a) illustrates a case where the window portion 18 is provided in the paper lid 1 (Fig. 8(a)) of the first embodiment, and Fig. 17(b) illustrates a case where the window portion 18 is provided in the paper lid 1 (Fig. 9(a)) of the sixth embodiment. Incidentally, in order to simplify the drawings, the drinking spout 5 or the cut portion 24 is not illustrated. As illustrated in Fig. 17(a), the window portion 18 is formed in the top lid portion 2. In addition to that, a film may be stretched also on a part (lower portion of the bottom lid portion 4), to which reference sign 4 is assigned, to serve as the window portion 18. As described above, since two window portions 18 are provided, a space formed by the two films serves as a heat insulating portion; and thereby, it is possible to improve the heat retention of the content in the container 20.

Fig. 17(b) illustrates an example where the window portion 18 is provided not in the top lid portion 2 but in the engaging portion 12. In Fig. 17(b), since an opening portion 19 is provided in the top lid portion 2, it is realized that the window portion 18 is provided in the engaging portion 12. Incidentally, instead of the opening portion 19, the window portion 18 may be provided also in the top lid portion 2.

**In** addition, a film may be stretched also on a part (lower portion of the engaging portion 12), to which reference sign 12 is assigned, to serve as the window portion 18, and a film may be stretched also on a part (lower portion of the bottom lid portion 4), to which reference sign 4 is assigned, to serve as the window portion 18. As described above, since two or more window portions 18 are provided, a space formed by the two films serves as a heat insulating portion; and thereby, it is possible to improve the heat retention of the content in container 20.

Incidentally, a curl portion may be formed in an upper surface of the engaging portion 12, and the engaging portion 12 and the bottom lid portion 4 may be joined to each other by the curl portion.

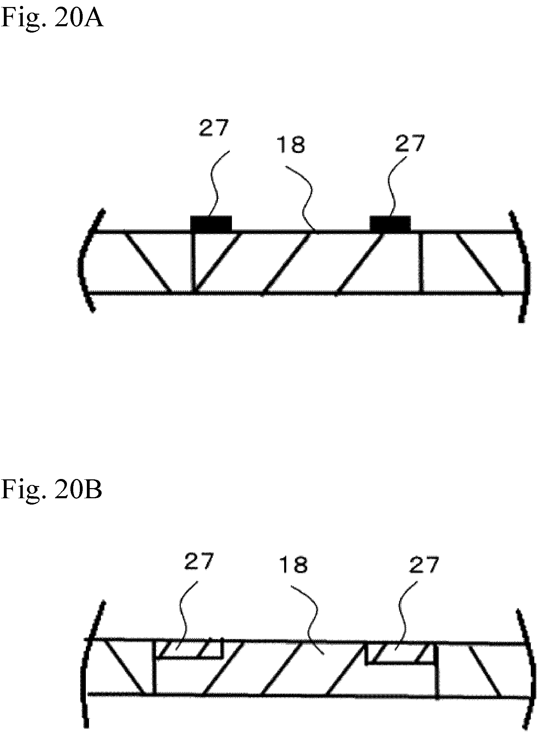

Fig. 20 is an enlarged cross-sectional view of the window portion 18 of the seventh embodiment, and in order to simplify the drawings, the cut portion 24 is omitted. When the cut portion 24 is formed in the window portion 18, the vicinity of the cut portion 24 becomes weaker compared to other parts. For this reason, in Fig. 20(a), a reinforcement portion 27 is formed as a reinforcement for the vicinity of the cut portion 24. An adhesive (for example, a hotmelt) may be applied as the reinforcement portion 27. The adhesive dries and is cured; and thereby, the vicinity of the cut portion 24 can be reinforced.

In Fig. 20(b), with regard to the reinforcement portion 27, the density of the film of the window portion 18 is increased by compressing the film. Specifically, the film of the window portion 18 is compressed by heat sealing, ultrasonic joining, high-frequency joining, or crimping. Accordingly, the vicinity of the cut portion 24 can be reinforced.

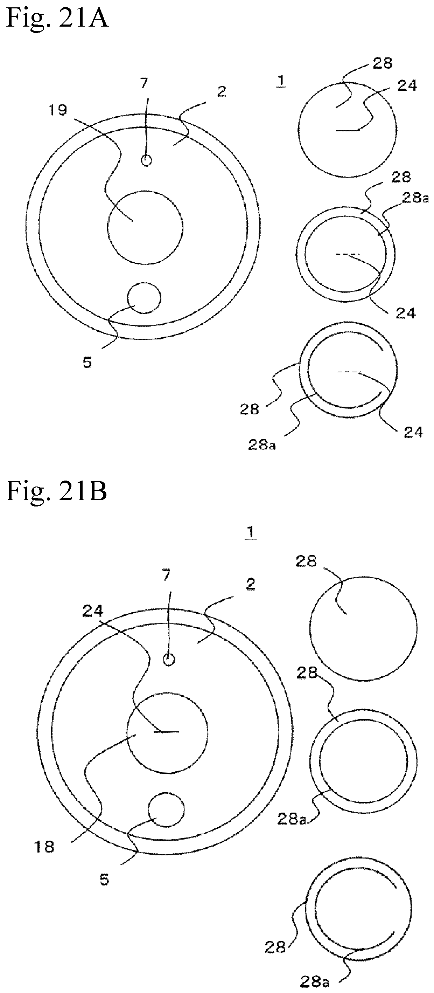

Fig. 21 is a modification example of the window portion 18 of the paper lid 1 of the third embodiment. In Fig. 21(a), the opening portion 19 is formed and the cut portion 24 is not formed in the paper lid 1, and the cut portion 24 is formed as a separate member. The separate member is a second seal portion 28, and three examples are illustrated on the right side of Fig. 21(a). Hereinafter, continually, the three examples will be described in order from above.

Incidentally, any one of the second seal portions 28 can be made of a film, a paper material, aluminum, a non-woven fabric, a rubber, or a cloth. In addition, a second sub-seal portion 28a can be also made of the foregoing materials.

The cut portion 24 is formed at the center of the second seal portion 28 illustrated uppermost. In Fig. 21(a), the second seal portion 28 has a circular shape; however, as long as the size of the second seal portion 28 is larger than the size of the opening portion 19, the second seal portion 28 may have any shape. A releasable adhesive may be applied to a surface of the second seal portion 28, which is opposite to the opening portion 19, such that the second seal portion 28 is joined to the circumference of the opening portion 19. Alternatively, the second seal portion 28 may be joined to the circumference of the opening portion 19 by heat sealing, ultrasonic joining, or high-frequency joining.

Accordingly, a straw can be inserted from the cut portion 24.

The second seal portion 28 illustrated in the middle has a donut shape, and the second sub-seal portion 28a which is smaller than the second seal portion 28 is formed on the second seal portion 28. The cut portion 24 is formed as described above, and the second seal portion 28 is joined to the circumference of the opening portion 19. A releasable adhesive is applied to the second sub-seal portion 28a, and is joined to the second seal portion 28. Incidentally, when the cut portion 24 is not formed in the second sub-seal portion 28a, since the cut portion 24 of the second seal portion 28 is not exposed, this configuration is hygienic. Then, the second sub-seal portion 28a is peeled off from the second seal portion 28, so that a straw can be inserted from the cut portion 24. Incidentally, the cut portion 24 may be formed also in the second sub-seal portion 28a.

As described above, since the second sub-seal portion 28a is provided, the cut portion 24 formed in the second seal portion 28 can be reinforced as in the case of the reinforcement portion 27 described above.

The second seal portion 28 illustrated lowermost has a donut shape, and the second sub-seal portion 28a which is smaller than the second seal portion 28 is formed on the second seal portion 28. A part of an outer periphery of the second sub-seal portion 28a is not cut but is integrated with the second seal portion 28. For this reason, the second sub-seal portion 28a is turned over from the second seal portion 28, so that a straw can be inserted from the cut portion 24.

Incidentally, printing may be performed on at least one of the second seal portion 28 and the second sub-seal portion 28a to provide a marker to help finding out an insertion port of a straw.

In addition, it is desirable that the cut portion 24 is shaped and sized to be usable with a paper straw or also a straw having a non-sharp tip.

Fig. 21(b) illustrates an example where the window portion 18 and the cut portion 24 are formed in the paper lid 1 and the cut portion 24 is covered with the second seal portion 28. The size of the second seal portion 28 is larger than the size of the window portion 18; however, the present invention is not limited thereto.

The second seal portion 28 illustrated uppermost may be peeled off from the window portion 18 owing to a releasable adhesive. In addition, approximately a half of an outer periphery of the second seal portion 28 may be welded to the window portion 18 by heat sealing, and the second seal portion 28 may be turned over.

The second seal portion 28 illustrated in the middle has a donut shape, and the second sub-seal portion 28a may be peeled off from the second seal portion 28 owing to a releasable adhesive. In addition, approximately a half of the outer periphery of the second sub-seal portion 28a may be welded to the second seal portion 28 by heat sealing, and the second sub-seal portion 28a may be turned over. The cut portion 24 may be formed or an opening portion may be formed in the second seal portion 28 to correspond to the cut portion 24 of the window portion 18.

The second seal portion 28 illustrated lowermost has a donut shape, and the second sub-seal portion 28a which is smaller than the second seal portion 28 is formed on the second seal portion 28. A part of an outer periphery of the second sub-seal portion 28a is not cut but is integrated with the second seal portion 28. In addition, the cut portion 24 or an opening portion may be formed in the second seal portion 28 to correspond to the cut portion 24 of the window portion 18.

For this reason, the second sub-seal portion 28a is turned over from the second seal portion 28, so that a straw can be inserted from the cut portion 24. Incidentally, the second seal portion 28 of Figs. 21(a) and 21(b) may include two sheets of seal portions (for example, a semicircular shape or a rectangular shape), and parts of the seal portions may overlap each other by approximately several millimeters. In addition, one end of the second seal portion 28 may be bent upward and pulled up with the fingers.

### (Fourth Embodiment)

Fig. 22(a) is a cross-sectional view of the paper lid 1 of a fourth embodiment, and is illustrated together with a partial enlarged view. In the present embodiment, a recessed portion 35 is formed in the sunken portion of the top lid portion 2. In addition, an engaging portion 36 which engages with the curl portion 22 is joined to the top lid portion 2. In addition, the second tapered portion 11 is pressed excluding a part thereof, and as a result, a protruding portion 37 having a circumferential shape is formed. Incidentally, in the drawing, the thickness (in a rightward and leftward direction) of the protruding portion 37 is illustrated as being small; however, since the thickness of the protruding portion 37 is thicker than the thickness of the paper material of the top lid portion 2 or the second tapered portion 11, it is possible to further improve the sealability between the paper lid 1 and the container 20.

Incidentally, the drawing is simplified, and the curl portion 9 and the curl portion 22 are outward curls. In addition, in order to simplify the drawing, the drinking spout 5 is not illustrated.

As one example of the dimensions of the paper lid 1, the diameter is from approximately 70 mm to 140 mm, an entire height H1 of the paper lid 1 is from 12 mm to 20 mm, and the height H2 of a peripheral wall from the curl portion 9 to the top lid portion 2 is from 3.5 mm to 12 mm. Incidentally, the height H2 of the peripheral wall depends on the capacity of the paper lid 1; however, from the viewpoint of the ease of drinking, it is preferable that the height H2 is from 6 mm to 9 mm. When the height H2 is set to be from approximately 36% to 53% of the entire height H1, it is possible to obtain the paper lid 1 which is well balanced. Incidentally, in a case where a plurality of the paper lids 1 are transported in a stacking manner, when the paper lids 1 are stacked for the curl portion 9 and the curl portion 9 to perfectly stick to each other, it is difficult to take out the paper lid 1. For this reason, it is desirable that a height obtained by subtracting the height H2 of the peripheral wall from the entire height H1 is larger than the height H2 of the peripheral wall. For this reason, it is more preferable that the height H2 of the peripheral wall is set to be from approximately 36% to 48% of the entire height H1. In addition, it is easy to take out the plurality of paper lids 1 which are stacked when taking out the paper lids 1, and the stacking height can be reduced.

In addition, it is desirable that the diameter of the curl portion 9 is from approximately 2 mm to 3 mm and a height obtained by subtracting the diameter of the curl portion 9 from the height H2 of the peripheral wall is larger than the diameter (height) of the curl portion. Accordingly, even when the user puts the mouth on the curl portion 9 to sip a hot beverage from the drinking spout 5, since the temperature of the content decreases according to the height H2 of the peripheral wall, it is possible to reduce the risk of a burn. As described with reference to Fig. 25(a), since the length L2 from the outer peripheral end (peripheral wall part) to the drinking spout 5 is from 1 mm to 15 mm, preferably from 4 mm to 12 mm, when a sum of the length L2 to the drinking spout 5 and the height H2 of the peripheral wall is set to be from 4.5 mm to 27 mm, preferably from 15 mm to 25 mm and the content is ingested via the peripheral wall, it is possible to further reduce the risk of a burn. Incidentally, the dimensions of the paper lid 1 look different on the drawings; however, the foregoing dimensions of the paper lid 1 can be applied also to the fourth to seventh embodiments. In addition, the basis weight of the paper lid 1 of the present embodiment may be less than from 150 g/m² to 300 g/m², preferably from approximately 200 g/m² to 250 g/m². As described above, since the basis weight is set to be in such a small range, when the paper lid 1 is mounted on the container 20, there is no deformation or damage to the curl portion 22 of the container 20. Incidentally, the basis weights of the top lid portion 2 and the second tapered portion 11 may be the same or different from each other; however, even when the basis weights are the same, it is desirable that the thickness of the top lid portion 2 is increased to reduce the density and thus to soften the top lid portion 2. When a hot beverage is put in the container 20 and the paper lid 1 is fitted to the container 20, the top lid portion 2 is deformed into a protruding shape due to vapor. Since the curl portion 9 is deformed inward according to the deformation of the top lid portion 2, the sealability between the paper lid 1 and the container 20 is improved.

The recessed portion 35 of the top lid portion 2 can be formed by, for example, press working, and it is desirable that the depth of the recessed portion 35 is from approximately 0.8 mm to 2.0 mm. In addition, the width of the recessed portion 35 is preferably set such that at least an upper portion of the curl portion 22 can be accommodated at both ends of the top lid portion 2. The width of the recessed portion 35 may be a width slightly smaller than the width of the curl portion 22 and the both ends of the top lid portion 2 may be elastically deformed to accommodate at least the upper portion of the curl portion 22. As described above, when the both ends of the top lid portion 2 accommodate at least the upper portion of the curl portion 22, the sealability between the paper lid 1 and the container 20 is improved.

In order to facilitate the formation of the recessed portion 35, the paper material (or paper lid 1) is desirably heated up to a temperature (for example, from 50°C to 100°C), at which the coating agent of the paper material is not adversely affected, by infrared rays or hot air. In addition, it is preferable that the lower die of the press machine, which holds the paper material (or the paper lid 1), is heated to 60°C to 130°C, preferably to 70°C to 100°C. Incidentally, only either one of the heating of the paper material (or the paper lid 1) and the heating of the press machine may be performed, or both may be performed. As described above, since the recessed portion 35 is formed, as illustrated in the partial enlarged view, a space between the second tapered portion 11 and the recessed portion 35 is reduced, and when the paper lid 1 is mounted on the container 20, the sealability is improved. Incidentally, the recessed portion 35 may be formed such that an end portion of the recessed portion 35 comes into contact with the curl portion 22. Incidentally, the recessed portion 35 may be formed by performing press working on a part corresponding to the recessed portion 35, or may be formed by turning the paper lid 1 upside down and performing press working on both ends of the top lid portion 2.

The engaging portion 36 is a ring-shaped (donut-shaped) member that is made of a paper material provided with a coating layer such as a film, and is joined to an inside of the top lid portion 2 by, for example, heat sealing or ultrasonic joining. In addition, both ends of the engaging portion 36 are free ends that are not joined to the top lid portion 2. Incidentally, the both ends of the engaging portion 36 may have a tapered shape, may be forward tapers having the same taper direction as that of the tapered portion 21, or may be reverse tapers having a taper direction different from that of the tapered portion 21.

The engaging portion 36 has dimensions to allow an engagement with the curl portion 22, and the free ends of the engaging portion 36 are bent upward, which is not illustrated, by the engagement of the free ends with the curl portion 22. Since the engaging portion 36 serves as a packing, when the paper lid 1 is mounted on the container 20, it is possible to improve the sealability. It is preferable that the basis weight of the engaging portion 36 is equal to the basis weight of the paper lid 1 or less, and the basis weight of the engaging portion 36 may be from approximately 150 g/m² to 250 g/m².

Since the engaging portion 36 has a ring shape, a space is formed inside the engaging portion 36 and the space serves as a heat insulating portion; and thereby, it is possible to improve the heat retention of the content in the container 20. In addition, when the container 20 is inclined, a space portion S1 formed by the curl portion 22, the top lid portion 2, and the engaging portion 36 is capable of holding the content from the container 20; and thereby, it is possible to reduce a leakage of the content from the paper lid 1 excluding the drinking spout 5. Incidentally, the engaging portion 36 may not have a ring shape but have a solid shape. Various corrugated cardboards having flutes may be used as the paper material, and instead of the paper material, a film (for example, a polyethylene film) may be used.

A piece member of which a part is recessed is pressed, so that the inner peripheral surface of the second tapered portion 11 is compressed. A part which is not pressed by the recessed part of the piece member remains as the protruding portion 37. The curl portion 22 goes over the protruding portion 37 to enter the space formed by the second tapered portion 11 and the recessed portion 35. The protruding portion 37 serves to prevent the fall-out of the curl portion 22 which has entered the space formed by the second tapered portion 11 and the recessed portion 35. Incidentally, a plurality of the protruding portions 37 may be provided in the inner peripheral surface of the second tapered portion. For example, two protruding portions 37 may be formed spaced apart from each other in an upward and downward direction, and the curl portion 22 may be fitted between the two protruding portions 37. In this case, a gap between the two protruding portions 37 is set to be narrower than the diameter of the curl portion 22, so that the curl portion 22 is collapsed (modified) and the paper lid 1 is fitted to the container 20; and thereby, it is possible to improve the sealability between the paper lid 1 and the container 20. Incidentally, the protruding portion 37 may not be continuous but be provided intermittently on an inner periphery of the second tapered portion 11. In addition, the shape of the protruding portion 37 may be any shape such as a rectangular shape, a semicircular shape, or an oval shape; however, from the viewpoint of sealability, it is preferable that the shape of a part of the protruding portion 37 is the same as the shape of the curl portion 22. For example, it is preferable that the shape of the part of the protruding portion 37, which engages with the curl portion 22, is the same circumferential shape as the circumferential shape of the curl portion 22.

Figs. 22(b) to 22(d) are enlarged views of a mode where a film is used as the engaging portion 36 and hereinafter, descriptions will be given in order. Fig. 22(b) illustrates a case where when the paper lid 1 is mounted on the container 20, the curl portion 22 goes over the free end of the engaging portion 36. Also in this case, since the space portion S1 formed by the curl portion 22, the top lid portion 2, and the engaging portion 36 is capable of holding the content from the container 20, it is possible to reduce a leakage of the content from the paper lid 1 excluding the drinking spout 5. Incidentally, in Fig. 22(b), the foregoing paper material provided with a coating layer such as a film may be used as the engaging portion 36. In this case, the shapes of the both ends of the engaging portion 36 may be bent at the right angle, may be bent at an acute angle, or may be bent at an obtuse angle. Accordingly, a gap between the second tapered portion 11 and an end portion of the engaging portion 36 can be further reduced. Particularly, when the shapes of the both ends of the engaging portion 36 have an obtuse angle as illustrated in Fig. 22(b), it is possible to further improve the sealability between the paper lid 1 and the container 20.

Fig. 22(c) illustrates a case where the end portion of the engaging portion 36 is not a free end and is joined to a side surface of the second tapered portion 11. The center and the periphery of the engaging portion 36 are joined to the top lid portion 2, and a part between the part joined to the top lid portion 2 and the part joined to the side surface of the second tapered portion 11 is not joined to any places. When the paper lid 1 is mounted on the container 20, the curl portion 22 comes into contact with the part that is not joined to any places, and the film forming the engaging portion 36 is elastically deformed toward the paper lid 1, so that the paper lid 1 and the container 20 are fitted to each other. For this reason, even when the container 20 is inclined, since the film forming the engaging portion 36 acts to prevent a leakage of the content from the container 20, there is no leakage of the content from the paper lid 1 excluding the drinking spout 5.

In addition, the space portion S1 is formed by the top lid portion 2, the second tapered portion 11, the engaging portion 36, and the curl portion 22. For example, even when the container 20 made of a paper is strongly grasped with the hand and thus the container 20 is deformed, since the space portion S1 follows the deformation or serves as a cushion, the paper lid 1 is less likely to be removed from the container 20.

Fig. 22(d) illustrates a case where the engaging portion 36 is not joined to the top lid portion 2 and the both ends of the engaging portion 36 are joined to the side surface of the second tapered portion 11. Also in this case, when the paper lid 1 is mounted on the container 20, the film forming the engaging portion 36 is elastically deformed toward the paper lid 1, so that the paper lid 1 and the container 20 are fitted to each other. For this reason, even when the container 20 is inclined, since the film forming the engaging portion 36 acts to prevent a leakage of the content from the container 20, there is no leakage of the content from the paper lid 1 excluding the drinking spout 5. The foregoing paper material provided with a coating layer such as a film may be used as the engaging portion 36. In this case, it is preferable that the engaging portion 36 has a solid shape and the engaging portion 36 is joined to the top lid portion 2. The flatness of the top lid portion 2 may be deteriorated by a process of producing the top lid portion 2, and there is a risk of the occurrence of a leakage of the content from the top lid portion 2 and the curl portion 22 due to a deterioration in the flatness of the top lid portion 2. For this reason, it is possible to reduce the risk of the occurrence of the foregoing leakage by causing the curl portion 22 to engage with the engaging portion 36 of which the flatness is maintained. Incidentally, the shape of the engaging portion 36 may be a ring shape.

In addition, the foregoing various joining methods can be applied as a method for joining the engaging portion 36. In addition, films other than a polyethylene film can be also used as the film. Incidentally, a paper material or another material such as an air-laid material where crushed pulps are laminated together may be also joined to the film as long as the film is elastically deformable.

In addition, in Figs. 22(b) to 22(d), the recessed portion 35 and the protruding portion 37 may be formed or may be omitted. When the recessed portion 35 is formed, a part of the engaging portion 36 may be joined to the recessed portion 35.

In addition, in Figs. 22(a) to 22(d), when the content of the container 20 is a hot beverage such as a hot coffee, since the pressure of a space sealed by the paper lid 1 and the container 20 becomes high, the adhesion of the film forming the engaging portion 36 is improved. Accordingly, it is possible to improve the sealability between the paper lid 1 and the container 20.

Figs. 22(e) to 22(g) are modification examples where a paper material provided with a coating layer such as a film is used as the engaging portion 36 and hereinafter, descriptions will be given in order. In Fig. 22(e), the end portion of the engaging portion 36 is formed by press working to substantially cover the outside of the curl portion 22. Contact surfaces of the recessed portion 35 and the engaging portion 36 are joined to each other. The end portion of the engaging portion 36 may be a free end, or may be joined to the second tapered portion 11. When the end portion of the engaging portion 36 is a free end, the dimensions of the end portion of the engaging portion 36 may be set such that the free end of the engaging portion 36 engages with the curl portion 22 to be bent upward.

When a bottom part of a paper cup is used as the paper lid 1, there is a risk that a seam of the paper material and the paper material is formed on the inside of the peripheral wall of the paper lid 1 and the content of the container 20 leaks from the seam. However, a part of the seam on the inside of the peripheral wall of the paper lid 1 can be pressed and sealed by the end portion of the engaging portion 36. For this reason, it is possible to prevent the content from leaking from the paper lid 1 along the seam. Accordingly, even when the container 20 is inclined, since the engaging portion 36 covers the outside of the curl portion 22, there is no leakage of the content from the paper lid 1 excluding the drinking spout 5. In addition, since the space portion S1 is formed by the top lid portion 2, the second tapered portion 11, the engaging portion 36, and the curl portion 22, even when the container 20 made of a paper is strongly grasped with the hand and thus the container 20 is deformed, the space portion S1 follows the deformation or serves as a cushion owing to the elasticity of the space portion S1; and thereby, the paper lid 1 is less likely to be removed from the container 20.

Incidentally, when the drinking spout 5 is formed in a part of the seam on the inside of the peripheral wall of the paper lid 1, the content leaks from the seam. For this reason, it is desirable that the drinking spout 5 is provided at a position different from that of the seam on the inside of the peripheral wall of the paper lid 1 (position where there is no interference therebetween).

Incidentally, when the engaging portion 36 of Fig. 22(e) is made of a film and the engaging portion 36 engages with the curl portion 22 using the elasticity of the film, the adhesion between the engaging portion 36 and the curl portion 22 is further improved.

In Fig. 22(f), an end portion of the engaging portion 36, which includes a protruding portion 36a and a recessed portion 36b, is formed by press working to substantially cover the outside and the inside of the curl portion 22. As described above, when a part of the seam on the inside of the peripheral wall of the paper lid 1 is pressed and sealed by the end portion of the engaging portion 36, it is possible to prevent the content from leaking from the paper lid 1 along the seam. Furthermore, a part of the seam formed on an inside of a peripheral wall of the container 20 can be pressed and sealed by the recessed portion 36b of the engaging portion 36. For this reason, it is possible to prevent the content from leaking from the paper lid 1 along the seam on the inside of the peripheral wall of the container 20.

Accordingly, even when the container 20 is inclined, since the engaging portion 36 covers the outside and the inside of the curl portion 22, there is no leakage of the content from the paper lid 1 excluding the drinking spout 5. Incidentally, the drinking spout 5 may be provided in a part where the recessed portion 35 and the engaging portion 36 are in contact with each other.

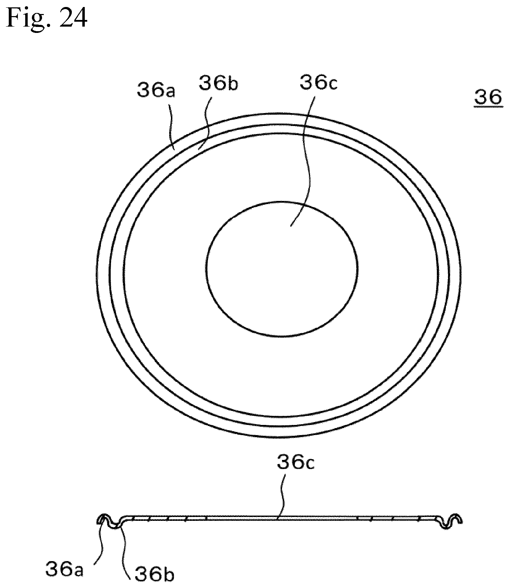

Fig. 24 is a schematic view and a cross-sectional view illustrating one example of the engaging portion 36 of Fig. 22(f). As illustrated in Fig. 24, the engaging portion 36 has a circular shape, and the protruding portion 36a which is a first part, the recessed portion 36b which is a second part, and an opening portion 36c are formed therein. The outer diameter of the engaging portion 36 is larger than the outer diameter of the bottom lid portion 4. For this reason, when the engaging portion 36 is fitted to the top lid portion 2, the end portion of the engaging portion 36 may be bent toward the container 20 side. Accordingly, the sealability between the paper lid 1 and the container 20 is improved. As described above, when the outer diameter of the engaging portion 36 is set to be larger than the outer diameter of the bottom lid portion 4 and the engaging portion 36 is fitted to the top lid portion 2, the joining of the top lid portion 2 and the engaging portion 36 by heat sealing may be omitted.

Incidentally, the thickness of the engaging portion 36 excluding the protruding portion 36a and the recessed portion 36b is from approximately 0.7 mm to 2.0 mm. When the thickness of the engaging portion 36 is set as described above, the strength of the top lid portion 2 or the recessed portion 35 is improved, and the flatness of the top lid portion 2 or the recessed portion 35 is improved. In addition, spring properties (elasticity) can be given to the protruding portion 36a, and the protruding portion 36a is capable of following a deformation of the curl portion 22. Incidentally, the protruding portion 36a has a semicircular shape to engage with the curl portion 22; however, the protruding portion 36a may have an inverted U-shape or an inverted V-shape. In addition, as another example of a manner where the protruding portion 36a engages with the curl portion 22, the size (size of a semicircular shape) of the protruding portion 36a may be set to be smaller than the size (diameter) of the curl portion 22, and the curl portion 22 may be deformed, so that the curl portion 22 engages with the protruding portion 36a. In addition, the recessed portion 36b may have a linear shape.

The protruding portion 36a and the recessed portion 36b are formed by press working as described above. The protruding portion 36a is shaped to cover the outside of the curl portion 22, and the recessed portion 36b is shaped to cover the outside of the curl portion 22. Namely, the protruding portion 36a and the recessed portion 36b are shaped to cover the curl portion 22. Incidentally, the protruding portion 36a and the recessed portion 36b may not cover all of the curl portion 22.

As described above, the engaging portion 36 is made of a paper material provided with a coating layer such as a film. The press working for forming the protruding portion 36a and the recessed portion 36b may be performed in a state where the film is joined to the paper material, or after the press working, the film may be stretched. When the protruding portion 36a is formed and then the film on a surface of the protruding portion 36a, which is opposite to the curl portion 22, is stretched, the protruding portion 36a is capable of engaging with the outside of the curl portion 22 using the elasticity of the film.

The opening portion 36c is an opening for positioning to join the engaging portion 36 to the recessed portion 35, and the size of the opening portion 36c can be appropriately set. Incidentally, the opening portion 36c may be omitted, and the positioning of the engaging portion 36 to be joined to the recessed portion 35 may be performed using an outer periphery of the engaging portion 36, or a notch may be formed in the engaging portion 36 to perform the positioning of the engaging portion 36 to be joined to the recessed portion 35.

Fig. 22(g) is an example where the protruding portion 37 is omitted from Fig. 22(a), and a paper material having elasticity (cushioning properties) is used as the paper material of the engaging portion 36. Incidentally, a coating layer such as a film is provided on at least a single surface (surface opposite to the container 20) of the paper material having elasticity. Various corrugated cardboards can be used as the paper material having elasticity. The corrugated cardboard is good in cushion properties and rigidity owing to flutes; however, an end portion of the corrugated cardboard has a weak rigidity and is prone to be elastically deformed. When the corrugated cardboard is used as the paper material of the engaging portion 36, since the end portion of the corrugated cardboard engages with the curl portion 22 to be elastically deformed, it is possible to improve the sealability between the paper lid 1 and the container 20.

As the paper material having elasticity, a paper material and a foamed polyethylene may be laminated together, or a soft paper material subjected to embossing or an air-laid material may be laminated. Also in this case, it is preferable that a coating layer such as a film is provided on or a waterproof agent is applied to at least a single surface (surface opposite to the container 20) of the paper material. In addition, the paper material having elasticity may be laminated between a paper material and a paper material. In addition, instead of the paper material having elasticity, various non-woven fabrics may be used.

Incidentally, the air-laid material may be heat-sealed with a film instead of being laminated with a paper material, so that a heat-sealed surface of the air-laid material is sealed by a heat treatment. As described above, the engaging portion 36 may be configured to include a coating layer (waterproof layer) and an elastic layer.

In addition, the paper material having elasticity may be formed by laminating a plurality of thin papers and providing coating layers on the laminated thin papers.

Incidentally, the free end of the engaging portion 36 of Fig. 22(g) may have a tapered shape, may be a forward taper having the same taper direction as that of the tapered portion 21, or may be a reverse taper having a taper direction different from that of the tapered portion 21.

In addition, the dimensions of the end portion of the engaging portion 36 may be set such that the free end of the engaging portion 36 engages with the curl portion 22 to be bent upward (toward the space portion S1).

In addition, the gap between the second tapered portion 11 and the end portion of the engaging portion 36 may be set to be smaller than the size of the curl portion 22, and the curl portion 22 may be deformed, so that the curl portion 22 engages between the second tapered portion 11 and the end portion of the engaging portion 36.

Incidentally, in Figs. 22(e) to 22(g), the protruding portion 37 may be provided in the second tapered portion 11, and the recessed portion 35 may be omitted. In the examples of Figs. 22(c), 22(e), and 22(f), when the protruding portion 37 is provided in the second tapered portion 11, it is desirable that the end portion of the engaging portion 36 is shaped to cover the protruding portion 37. Accordingly, the content of the container 20 is less likely to leak from the paper lid 1.

In addition, in Figs. 22(a) to 22(g), when the taper angle of the second tapered portion 11 is more acute than the taper angle of the tapered portion 21 of the container 20, it is possible to further increase the volume of the space portion S1. Accordingly, even when the container 20 is deformed, the paper lid 1 is less likely to be removed from the container 20.

Incidentally, instead of the engaging portion 36, an elastic member may be provided on a curl portion 22 side of the top lid portion 2 or on the inner peripheral surface of the second tapered portion 11 to engage with the curl portion 22. A film, a rubber, a foamed polyethylene, a polyurethane, a silicone, or a hotmelt can be used as the elastic member.

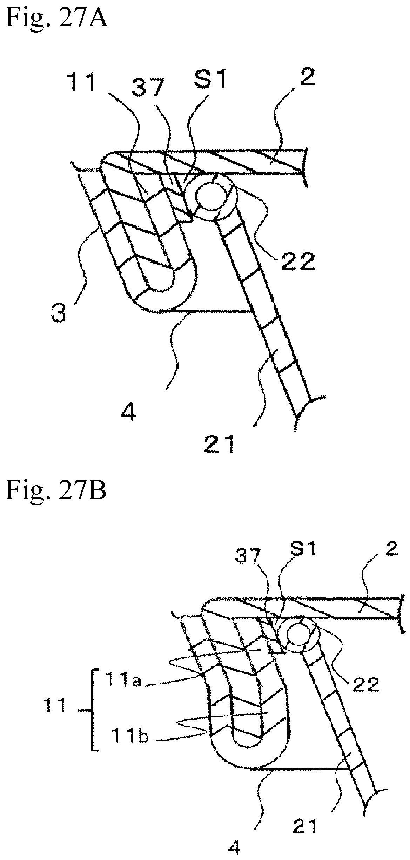

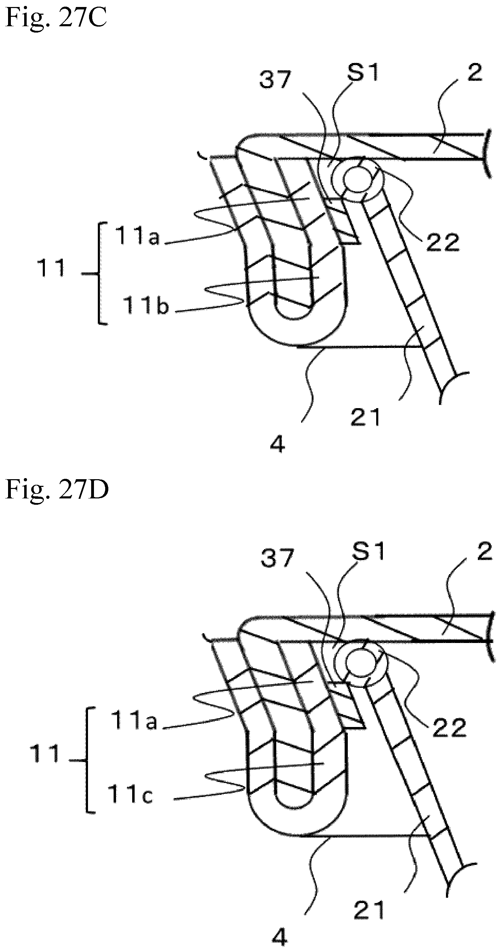

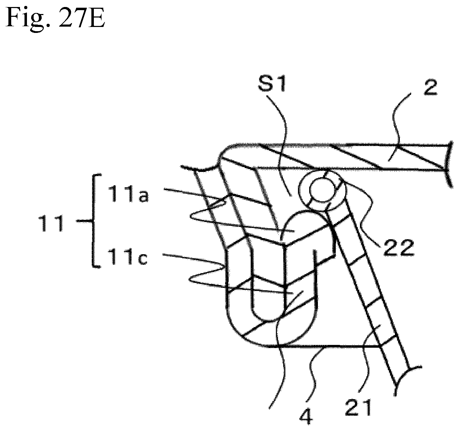

Fig. 27 also illustrates other examples of cross-sectional views of the paper lid 1 of the eighth embodiment. Five examples of the paper lid 1 are illustrated in Figs. 27(a) to 27(e). Hereinafter, the examples of Figs. 27(a) to 27(e) will be sequentially described. Incidentally, in the five examples, the recessed portion 35 and the engaging portion 36 are omitted; however, the recessed portion 35 and the engaging portion 36 may be provided.

Fig. 27(a) illustrates an example where the protruding portion 37 which has a circumferential shape and is provided on the inner periphery of the second tapered portion 11 is fitted to the curl portion 22. In this case, the inner diameter of a tip of the protruding portion 37 which the curl portion 22 enters is set to be smaller than the outer diameter of the curl portion 22, so that at least one of the curl portion 22 and the protruding portion 37 is deformed to allow the curl portion 22 and the protruding portion 37 to be fitted to each other; and thereby, it is possible to improve the sealability between the paper lid 1 and the container 20.

Fig. 27(b) illustrates an example where the second tapered portion 11 is formed at a plurality of different taper angles. For example, the taper angle of a strong tapered portion 11a is 5°, and the taper angle is stronger (larger) than that of a weak tapered portion 11b to be described later. The weak tapered portion 11b is provided closer to the container 20 side (curl portion 22 side) than the strong tapered portion 11a. For example, the taper angle of the weak tapered portion 11b is 3°, and the taper angle is weaker (smaller) than that of the strong tapered portion 11a. As described above, since the taper angle on the container 20 side (curl portion 22 side) is set to be weak (small), the curl portion 22 easily enters the paper lid 1. Incidentally, when the taper of the weak tapered portion 11b has a tapered shape (tapered shape that is widened outward) reverse to that of the strong tapered portion 11a, the curl portion 22 enters the paper lid 1 more easily.

Incidentally, in Figs. 27(a) and 27(b), the dimension of the protruding portion 37 in the Z direction (height direction) may be a half the diameter of the curl portion 22 or larger, preferably equal to the diameter of the curl portion 22 or larger; and thereby, it is possible to improve the sealability between the paper lid 1 and the container 20.

Fig. 27(c) illustrates an example where the protruding portion 37 is provided on a lower side of the strong tapered portion 11a. Accordingly, when the paper lid is fitted to the container 20, the curl portion 22 goes over the protruding portion 37; and thereby, the user can feel the sense of a notch, and sensuously feel that the paper lid 1 is closed.

Fig. 27(d) illustrates an example where the protruding portion 37 is provided on the lower side of the strong tapered portion 11a and instead of the weak tapered portion 11b, a linear portion 11c is provided. Since the curl portion 22 easily enters the paper lid 1 owing to the linear portion 11c, the user can simply mount the paper lid 1 on the container 20. Incidentally, a seam of the strong tapered portion 11a and the weak tapered portion 11b or a seam of the strong tapered portion 11a and the linear portion 11c may be linear or curved.

Fig. 27(e) illustrates an example where instead of the protruding portion 37 being provided, a tip of the strong tapered portion 11a is bent inward. Accordingly, the space portion S1 can be more widened compared to the other examples; and thereby, the space portion S1 is capable of holding the content. In addition, since the curl portion 22 goes over an inward bent part of the tip of the strong tapered portion 11a, it is possible to secure the sense of a notch, and it is possible to secure the sealability between the paper lid 1 and the container 20. Incidentally, also in Figs. 27(a) to 27(d), the protruding portion 37 may be omitted, and the tip of the second tapered portion 11 or the tip of the strong tapered portion 11a may be bent inward.

Incidentally, the protruding portion 37 is not limited to a case where the protruding portion 37 is formed by attaching a separate member, and the protruding portion 37 may be integrally formed on the inside of the tapered portion by a molding device including a piece member to be described later.

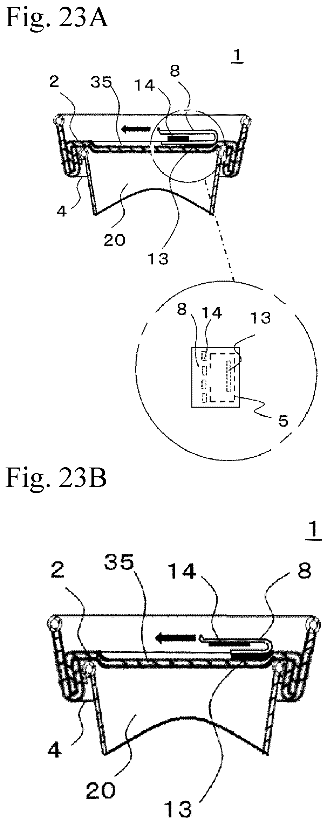

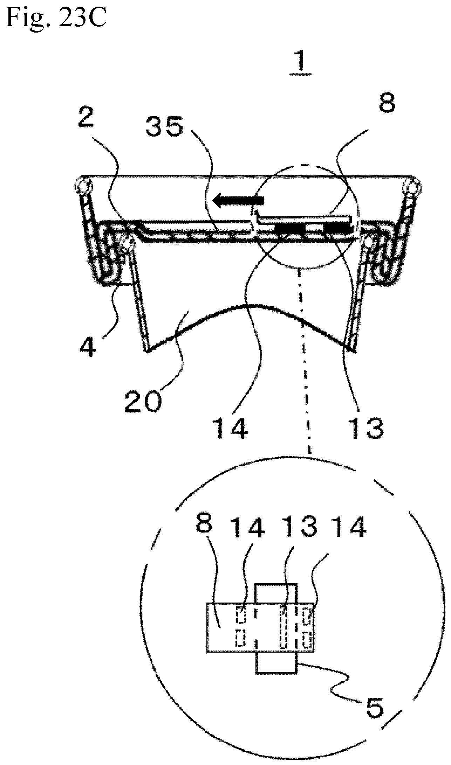

Fig. 23 is a cross-sectional view illustrating the seal portion 8 of the paper lid 1 of the eighth embodiment. Three examples of the seal portion 8 of the paper lid 1 are illustrated in Figs. 23(a) to 23(c). Hereinafter, the examples of Figs. 23(a) to 23(c) will be sequentially described. Incidentally, the paper lids 1 other than that of the eighth embodiment may be used as the paper lid 1.

Fig. 23(a) illustrates the seal portion 8 that seals the drinking spout 5 formed in the recessed portion 35 of the top lid portion 2. A view where the drinking spout 5 is seen from above is illustrated below. The drinking spout 5 has the same shape as the shape illustrated in Fig. 2(c), and a cut is provided in the recessed portion 35 and the drinking spout 5 is opened in an arrow direction of the paper lid 1. The seal portion 8 is sized to cover the drinking spout 5; however, the seal portion 8 may be sized to cover a part of the drinking spout 5. Incidentally, it is difficult to see the drinking spout 5, and thus characters or pictures indicating the location of the drinking spout 5 may be printed on the seal portion 8.

The seal portion 8 has an inverted C-shape, and the lower surface of the seal portion 8 and the recessed portion 35 are joined to each other by the adhesive 13 that is provided to correspond to an upper surface of the drinking spout 5. Incidentally, a tip of a free end of the seal portion 8 extends upward to serve as a pull-up portion of the seal portion 8.

The adhesive 14 which is releasable is dispersedly applied to a surface of the seal portion 8 which is opposite to the lower surface of the seal portion 8, to which the adhesive 13 is applied. Incidentally, the adhesive 14 which is releasable may be applied to a plurality of places in a dot pattern, may be applied in a spiral pattern, or may be continuously applied. When the pull-up portion is pulled in the direction indicated by an arrow in Fig. 23 (a), a part of the drinking spout 5 in which the cut is not formed serves as a hinge, and the drinking spout 5 is opened. Furthermore, when the seal portion 8 is pulled in the arrow direction, the shape of the seal portion 8 is changed from an inverted C-shape to a linear shape, and the adhesive 14 which is releasable becomes opposite to the recessed portion 35. In this state, the adhesive 14 which is releasable is pressed against the recessed portion 35, so that an open state of the drinking spout 5 can be held.

Fig. 23(b) illustrates an example where the position of application of the adhesive 14 which is releasable is different from that in Fig. 23(a), and the adhesive 14 which is releasable is applied to a back surface of an upper portion of an inverted C-shape. When the pull-up portion is pulled in a direction indicated by an arrow in Fig. 23(b), the drinking spout 5 is opened, the shape of the seal portion 8 is changed from an inverted C-shape to a linear shape, and the adhesive 14 which is releasable becomes opposite to the recessed portion 35. In this state, the adhesive 14 which is releasable is pressed against the recessed portion 35, so that an open state of the drinking spout 5 can be held.

Fig. 23(c) illustrates an example where the seal portion 8 has a linear shape and the adhesive 13 and the adhesive 14 which is releasable are applied to the lower surface of the seal portion 8, which is a surface opposite to the recessed portion 35. Incidentally, the adhesive 13 corresponds to the upper surface of the drinking spout 5. In this case, the adhesive 14 which is releasable may be applied to be joined to the recessed portion 35, or may be applied to not be joined to the recessed portion 35. When the adhesive 14 which is releasable is joined to the recessed portion 35, it is preferable that a release paper is affixed to the recessed portion 35 to be joined to the adhesive 14 which is releasable or a release agent such as a silicon or Teflon (registered trademark) is applied to the recessed portion 35. Incidentally, it is preferable that the release paper is provided to not interfere with at least a part (drinking spout 5 side) of the adhesive 13.

As illustrated in an enlarged view of Fig. 23(c), the seal portion 8 is shaped to cover a part of the drinking spout 5, and the adhesives 14 which are releasable are provided at two places to interpose the drinking spout 5 therebetween. As described above, the adhesive 14 which is releasable is provided also between the drinking spout 5 and the peripheral wall; and thereby, it is possible to confirm whether or not the drinking spout 5 is open.

After the pull-up portion is pulled in a direction indicated by an arrow in Fig. 23(c) to open the drinking spout 5, the adhesive 14 provided close to the center, which is releasable, is pressed against the recessed portion 35 from the center, so that an open state of the drinking spout 5 can be held.

In the present embodiment, the adhesive force of the adhesive 13 is larger than the adhesive force of the adhesive 14. Instead of the foregoing manner or in conjunction therewith, it is preferable that the coating amount of the adhesive 13 is larger than the coating amount of the adhesive 14. In addition, an adhesive may be applied to the entirety of the back surface of the seal portion 8 and a wax may be applied to the pull-up portion or a part where the adhesive force is to be weak to cancel out the adhesive force of the adhesive. Also in this case, it is possible to appropriately reduce the coating amount of the adhesive or increase the coating amount of the wax with respect to the pull-up portion or the part where the adhesive force is to be weak. Incidentally, the lower surface of the seal portion 8 and the recessed portion 35 may be joined to each other by heat sealing instead of the adhesive 13. In addition, the seal portion 8 may be formed as a Z-fold. In addition, the recessed portion 35 may not be formed, and the top lid portion 2 may be flat.

Incidentally, in regard to the size of the drinking spout 5 illustrated in Figs. 2 and 23, when the drinking spout 5 has a circular shape, the diameter may be from approximately 6 mm to 14 mm, and when the drinking spout 5 has a rectangular shape, the length of a diagonal line may be from approximately 9 mm to 20 mm. Accordingly, a large ice does not pass through the drinking spout 5, so that the children can be prevented from accidentally swallowing the large ice.

### (Method for Producing Paper Lid 1 of Fig. 27(a))

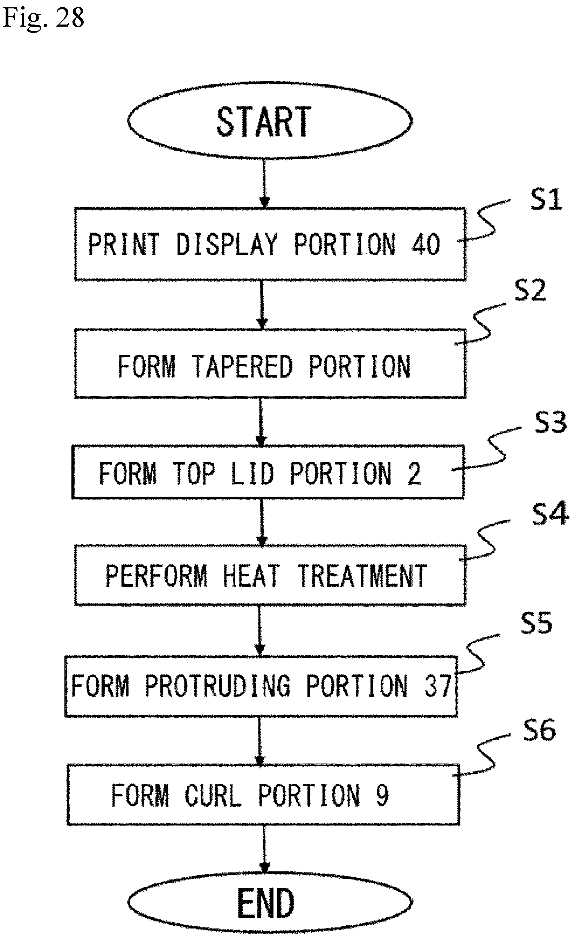

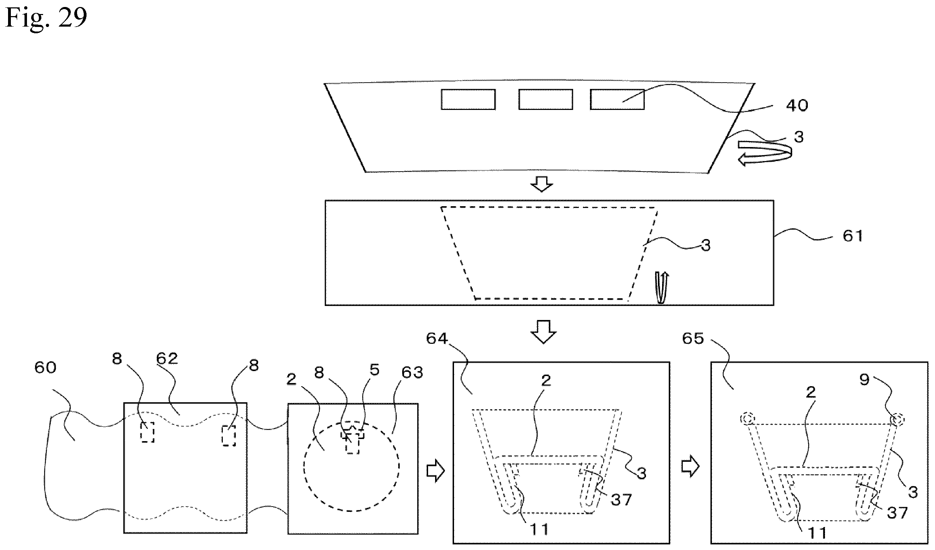

Fig. 28 is a flowchart illustrating one example of a method for producing the paper lid 1, and Fig. 29 is a schematic view of the method for producing the paper lid 1. Hereinafter, the method for producing the paper lid 1 will be described. Incidentally, here, a method for producing the paper lid 1 illustrated in Fig. 27(a) as an example will be described.

A material (referred to as a fan-shaped paper material including a coating layer) forming the tapered portion 3 of the paper lid 1 is mold cut into a fan shape as illustrated in Fig. 26, and in this state, the printing of the display portion 40 is performed (step S1). Incidentally, the printing of the display portion 40 may be performed before the material is mold cut into a fan shape. In addition, the display portion 40 may be printed on the paper material, or may be printed on a film which is a coating layer. In addition, the number of the display portions 40 is not limited to three. It is desirable that a cut of the cut portion 41 is formed subsequent to the printing of the display portion 40.

The fan-shaped paper material including a coating layer is transported to a first processing station 61. In the first processing station 61, in a state where both ends of the fan shape of the fan-shaped paper material including a coating layer partially overlap each other, the both ends are joined to each other by, for example, ultrasonic joining. Accordingly, the tapered portion 3 is formed (step S2). In this case, the tapered portion 3 is formed using a die by which the tapered portion 3 is mold cut. Incidentally, a partially overlapped part becomes a seam.

In addition, a lower edge of the fan-shaped paper material including a coating layer is bent inward by press working, so that the second tapered portion 11 is formed. Incidentally, an upper side of the fan-shaped paper material including a coating layer becomes the curl portion 9 or the peripheral wall surrounding the top lid portion 2, which will be described later.

The fan-shaped paper material including a coating layer, of which the processing has been completed in the first processing station 61, is transported to a fourth processing station 64. Prior to a process in the fourth processing station 64 being described, a method for producing the top lid portion 2 will be described.

A raw material 60 is a paper material including a coating layer, and is used to form the top lid portion 2. As illustrated in Fig. 29, an upper end and a lower end of the raw material 60 have a wavy shape. Hereinafter, continually, the wavy shape will be described.

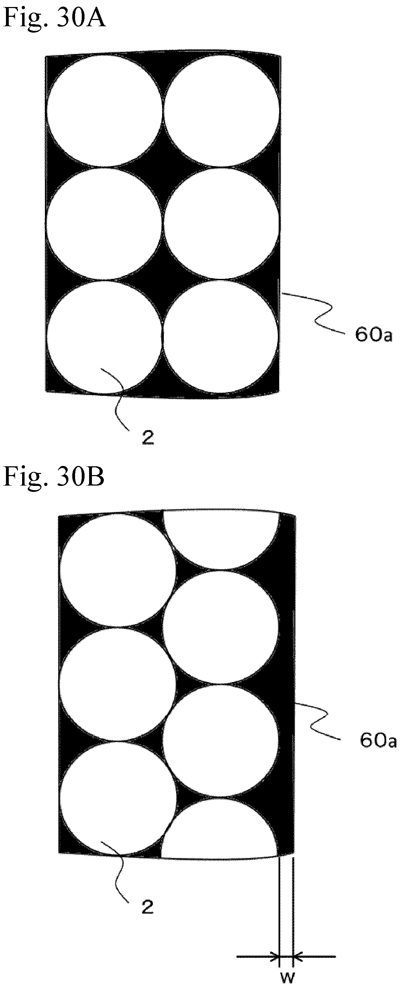

Fig. 30 is a view illustrating a method for extracting the top lid portion 2 from a raw material 60a. Here, two rows of the top lid portions 2 are extracted from the raw material 60a. As illustrated in Fig. 30(a), when a first row of the top lid portions 2 and a second row of the top lid portions 2 of which the positions in the upward and downward direction are the same are extracted, a blackened part is discarded after the top lid portions 2 are extracted.

On the other hand, as illustrated in Fig. 30(b), when the first row of the top lid portions 2 and the second row of the top lid portions 2 of which the positions in the upward and downward direction are offset from each other are extracted, a blackened part to be discarded is reduced. Furthermore, since a width w of the raw material 60a is not used, the width of the raw material 60a can be reduced by the width w, and the raw material 60a can be efficiently used; and thereby, it is possible to reduce the production cost of the paper lid 1. Incidentally, it is preferable that the amount of offset between the first row and the second row of the top lid portions 2 in the upward and downward direction is approximately a half the radius of the top lid portion 2. In Fig. 30, the two rows of the top lid portions 2 are extracted from the raw material 60a; however, three or more rows of the top lid portions 2 may be extracted according to the width of the raw material 60a.

In the present embodiment, since three or more rows of the top lid portions 2 are extracted from one sheet of the raw material 60a by the method in Fig. 30(b), an upper end and a lower end of a raw material for one row (raw material 60 illustrated in Fig. 29) have a wavy shape. However, at least one of the upper end and the lower end may have a linear shape. For example, when two rows of the top lid portions 2 are extracted from one sheet of the raw material 60a by the method in Fig. 30(b), the upper end or the lower end of the raw material 60 has a linear shape. In addition, the raw material 60a of Fig. 30(a) may be used, and also in this case, one of the upper end and the lower end has a wavy shape, and the other of the upper end and the lower end has a linear shape. Incidentally, when the raw material 60a of Fig. 30(a) is a raw material for one raw, both of an upper end and a lower end have a linear shape, and such a raw material may be used.

Returning to Fig. 29, the raw material 60 is transported to a second processing station 62. In the second processing station 62, the seal portions 8 illustrated in Fig. 23 are joined to the raw material 60. In the second processing station 62, two seal portions 8 are illustrated as being joined; however, the number of the seal portions 8 may be one or may be three or more. The seal portion 8 is transported from a raw material for a seal (not illustrated), a release paper for protection is removed in the process of transportation of the seal portion 8, and an adhesive surface of the seal portion 8 is joined to the raw material 60. A release paper which is different from the release paper for protection may be provided in a part in Fig. 29 to which the adhesive 14 adheres, and the adhesive force of the adhesive 14 may be weaker than the adhesive force of the adhesive 13.

The raw material 60 to which the seal portions 8 are joined is transported to a third processing station 63. In the third processing station 63, a process of forming the drinking spout 5 is performed using a cutting tool. In addition, in the third processing station 63, the extraction of the top lid portion 2 is performed using the cutting tool. The drinking spout 5 is processed while using the seal portion 8, which is joined to the raw material 60, as a marker.

The top lid portion 2 is extracted as indicated by a circular dotted line. In addition, the outer periphery of the top lid portion 2 is bent by press working such that the top lid portion 2 is joined between the tapered portion 3 having a U-shaped cross-section and the second tapered portion 11 (step S3). Incidentally, either of the processing of the drinking spout 5 and the extraction of the top lid portion 2 may be preferentially performed, or both may be performed at the same time.

In addition, the layout may be modified to exchange the position of the second processing station 62 and the position of the third processing station 63, and the process in the third processing station 63 may be performed prior to the process in the second processing station 62. In this case, the seal portion 8 is joined to the top lid portion 2 while using the drinking spout 5 as a marker.

In the present embodiment, the top lid portion 2 of which the processing has been completed at the third processing station 63 is transported to the fourth processing station 64.

In the fourth processing station 64, the top lid portion 2 of which the outer periphery is bent by press working is fitted between the tapered portion 3 having a U-shaped cross-section and the second tapered portion 11. A heat treatment is performed in a state where the top lid portion 2 is fitted between the tapered portion 3 and the second tapered portion 11 (step S4). The films with which the top lid portion 2, the tapered portion 3, and the second tapered portion 11 are coated are melt by the heat treatment, so that the top lid portion 2, the tapered portion 3, and the second tapered portion 11 are jointed to each other by heat sealing. Incidentally, the joining of the top lid portion 2, the tapered portion 3, and the second tapered portion 11 by heat sealing may be performed over the entire surfaces thereof or may be partially performed. For example, the joining of the tapered portion 3 and the second tapered portion 11 by heat sealing may not be performed in the vicinity of the protruding portion 37.

In addition, the peripheral wall surrounding the top lid portion 2 is formed by the tapered portion 3. Incidentally, in the above description, in step S2, the lower edge of the fan-shaped paper material including a coating layer is subjected to press working to form the second tapered portion 11, and in step S3, the outer periphery of the top lid portion 2 is bent by press working; however, the present invention is not limited thereto. For example, immediately before the heat treatment in step S4 is performed or while the heat treatment is performed, at least one of the foregoing press workings may be performed.

When the top lid portion 2, the tapered portion 3, and the second tapered portion 11 are joined to each other by heat sealing, it is preferable that the drinking spout 5 is away from the seam formed in the tapered portion 3 (also referred to as the peripheral wall surrounding the top lid portion). For this reason, it is desirable that a mark provided in the seam or in the vicinity of the seam is detected by an unillustrated detection device and based on a detection result, the top lid portion 2 is rotated to adjust the position of the drinking spout 5 and then the foregoing heat sealing is performed.

Incidentally, the drinking spout 5 may be formed after the top lid portion 2 is joined to the tapered portion 3 and the second tapered portion 11. The seal portion 8 may be formed subsequent to the formation of the drinking spout 5, or the seal portion 8 may be formed in a later step.

The inner peripheral surface of the second tapered portion 11 is pressed by a piece member of which a part is recessed, so that a part of the second tapered portion 11 which is not pressed by the recessed part of the piece member is formed as the protruding portion 37 (step S5). Incidentally, the protruding portion 37 is formed in an upper end portion of the second tapered portion 11, and the position of the protruding portion 37 in the height direction can be appropriately adjusted by the shape of the piece member. In addition, the height of the protruding portion 37 can be adjusted by adjusting the pressure under which pressing the piece member is performed. Incidentally, the height of the protruding portion 37 may be adjusted by the basis weight of the second tapered portion 11.

In a case where after the inner peripheral surface of the second tapered portion 11 is pressed by the piece member, the dimension of the inner diameter of the tip (bottom lid portion 4 side) of the second tapered portion 11 is the same as or slightly smaller than that of the outer diameter of the curl portion 22, when the paper lid is fitted to the container 20, the curl portion 22 is collapsed (deformed), so that the paper lid 1 and the container 20 are fitted to each other. Therefore, it is possible to improve the sealability between the paper lid 1 and the container 20. Instead of the foregoing manner or in conjunction therewith, the inner diameter of the tip of the protruding portion 37 which the curl portion 22 enters may be set to be smaller than the outer diameter of the curl portion 22. Accordingly, at least one of the curl portion 22 and the protruding portion 37 is deformed to allow the curl portion 22 and the protruding portion 37 to be fitted to each other; and thereby, it is possible to improve the sealability between the paper lid 1 and the container 20.

After the protruding portion 37 is formed, the top lid portion 2, the tapered portion 3, and the second tapered portion 11 which are joined to each other by heat sealing are transported to a fifth processing station 65.

Incidentally, in the fifth processing station 65, the curl portion 9 is formed by the curl molding die 70 illustrated in Fig. 11 (step S6). Accordingly, the paper lid 1 of Fig. 27(a) can be produced. Incidentally, the foregoing production method is one example, and a modification such as exchanging the orders of some steps can be made thereto.

In addition, as described above, since the raw material 60 is a paper material including a coating layer, when the window portion 18 illustrated in Figs. 16 and 21 is to be formed, it is preferable that an opening of the window portion 18 is formed before the coating layer such as a film is joined to the paper material. When the paper material and the film are joined to each other, the paper material and the film may be laminated together or may be T-die molded. Incidentally, when the paper material and the film are joined to each other by heating, the dimensions of the film are prone to change in a process where the temperature returns to a normal temperature or a room temperature. For this reason, a step of cooling the paper material and the film which are joined to each other may be provided. Alternatively, a raw material in which the window portion 18 is formed may be used as the raw material 60. Accordingly, even when a cooling step is not provided, since a sufficient time can be taken until the process is performed in the second processing station 62, it is possible to reduce a change in the dimensions of the film.

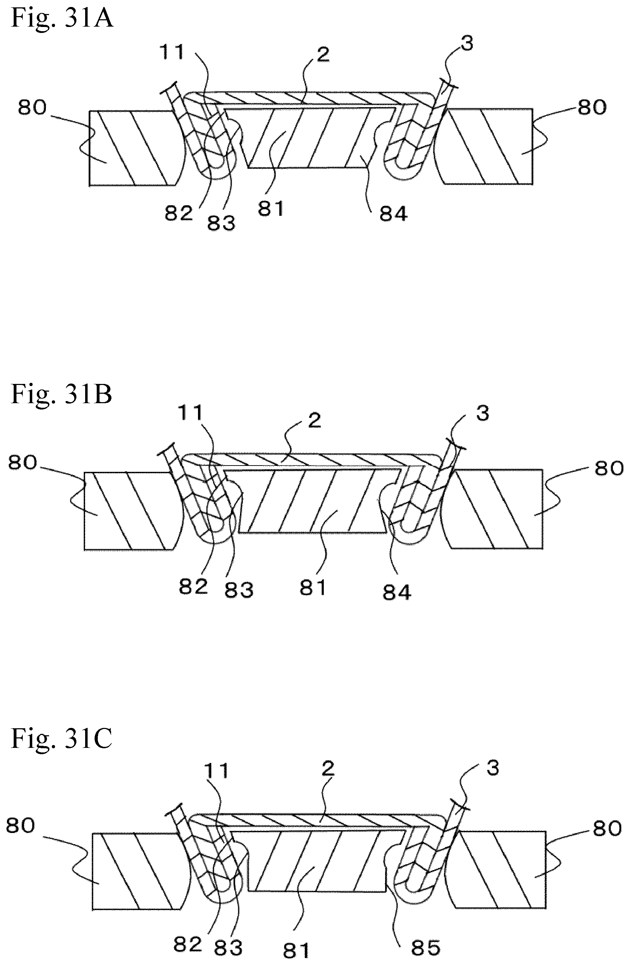

Incidentally, here, examples where the protruding portion 37 of Fig. 22(a), the protruding portion 37 of Fig. 27(c), and the protruding portion 37 of Fig. 27(d) are formed using the piece member will be described. Fig. 31 is a cross-sectional view of a forming device that forms the protruding portion 37. In Figs. 31(a) to 31(c), three examples of the forming device are illustrated. Hereinafter, descriptions will be given in order and duplicate descriptions will be omitted. Incidentally, the forming device can be provided in the fourth processing station 64.

Fig. 31(a) illustrates the forming device that forms the protruding portion 37 of Fig. 22(a). The forming device includes a fixing member 80 that fixes the tapered portion 3 having a U-shaped cross-section from outside, and a piece member 81 made of metal. The piece member 81 has, on the whole, a circular shape or an oval shape, and includes an upper tapered portion 82 having the same tapered shape as that of the second tapered portion 11, a barbed portion 83 that forms the protruding portion 37, and a lower tapered portion 84 having the same tapered shape as that of the second tapered portion 11.

Here, it is assumed that the top lid portion 2 is already joined to the tapered portion 3 having a U-shaped cross-section. In a state where the tapered portion 3 having a U-shaped cross-section is fixed by the fixing member 80, the piece member 81 is eccentrically rotated by an unillustrated driving mechanism to cause the upper tapered portion 82 and the lower tapered portion 84 to press the inner periphery of the second tapered portion 11, so that the protruding portion 37 of Fig. 22(a) can be formed.

Fig. 31(b) illustrates the forming device that forms the protruding portion 37 and the weak tapered portion 11b of Fig. 22(c), and the taper angle of the lower tapered portion 84 is different from the taper angle of the second tapered portion 11. The weak tapered portion 11b can be formed by pressing the inner periphery of the second tapered portion 11 with the lower tapered portion 84 having a taper angle different from the taper angle of the second tapered portion 11.

Fig. 31(c) illustrates the forming device that forms the protruding portion 37 and the linear portion 11c of Fig. 22(d), and instead of the lower tapered portion 84, a linear portion 85 is provided. The linear portion 11c can be formed by pressing the inner periphery of the second tapered portion 11 with the linear portion 85.

### (Heat Retention)

In regard to an improvement in the heat retention of the content in the container 20, other effects can be obtained by the paper lid 1. Hereinafter, an improvement in heat retention obtained by the paper lid 1 of the fifth embodiment will be described.

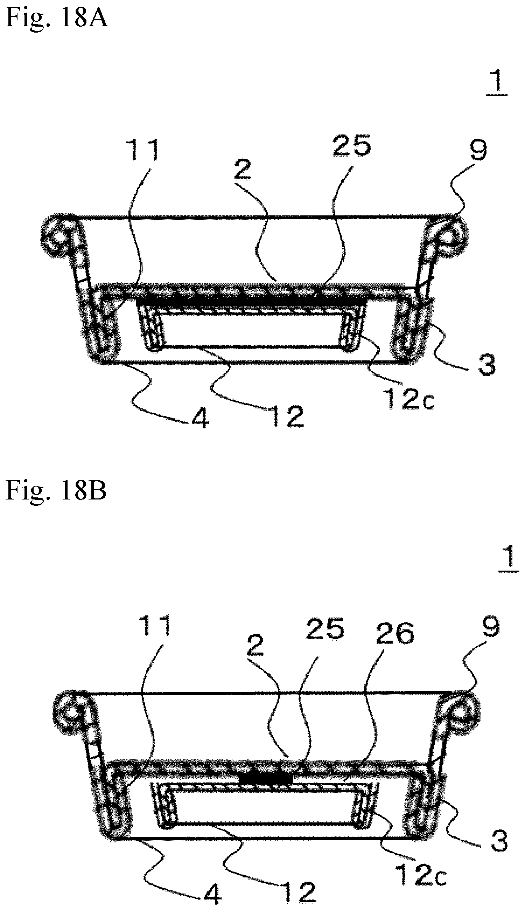

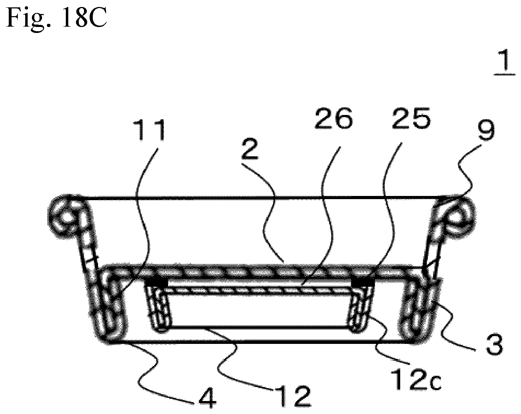

Fig. 18 is a view illustrating an example of the joining of the top lid portion 2 of the paper lid 1 and the engaging portion 12 in Fig. 9(a). Fig. 18(a) is an example of a joining where an adhesive 25 is applied to the entire surfaces of the top lid portion 2 and the top lid portion 2a (refer to Fig. 10) of the engaging portion 12 to bond the top lid portion 2 and the engaging portion 12, and a space portion 26 is not present between the top lid portion 2 and the top lid portion 2a. Fig. 18(b) is an example of a joining where the adhesive 25 is applied to central portions of the top lid portion 2 and the top lid portion 2a (refer to Fig. 10) of the engaging portion 12 to bond the top lid portion 2 and the engaging portion 12, and the space portion 26 is present. Fig. 18(c) is an example of a joining where an adhesive 25 is applied to outer peripheries of the top lid portion 2 and the top lid portion 2a (refer to Fig. 10) of the engaging portion 12 to bond the top lid portion 2 and the engaging portion 12, and the space portion 26 is present.

**In** a state where 150 cc of water (content) at 75°C was put in the 5 oz container 20 and the paper lid 1 was fitted to the container 20, a heat retention test was carried out to measure the temperature of the water (content) per elapsed time. **In** addition, the tests were performed in two types of states such as a state where the drinking spout 5 was closed and a state where the drinking spout 5 was open.

In addition, as a comparative example, the test was performed also on a plastic lid in current use. Since the plastic lid is not a type of lid where the top lid portion 2 and the engaging portion 12 are joined to each other, a bonding part is not present.

**[Table 1]**

| State of lid | Bonding method | Elapsed time (minutes) | | | | | | |
|---|---|---|---|---|---|---|---|---|
| | | 0 | 10 | 20 | 30 | 40 | 50 | 60 |
| Drinking spout 5 is open | Entire surface bonding | 75 | 57 | 51 | 45 | 42 | 39 | 37 |
| | Central bonding | 75 | 58 | 52 | 46 | 43 | 40 | 38 |
| | Outer | 75 | 58 | 52 | 46 | 43 | 40 | 38 |
| | peripheral bonding | | | | | | | |
| | Comparative Example | 75 | 57 | 51 | 46 | 42 | 39 | 37 |
| Drinking spout 5 is closed | Entire surface bonding | 75 | 57 | 52 | 47 | 44 | 41 | 38 |
| | Central bonding | 75 | 58 | 52 | 48 | 44 | 41 | 39 |
| | Outer peripheral bonding | 75 | 58 | 52 | 48 | 44 | 41 | 39 |
| | Comparative Example | 75 | 57 | 51 | 47 | 43 | 40 | 37 |

As shown in Table 1, the heat retention of the paper lid 1 is not inferior to that of the plastic lid in current use, and in a measurement in the example where the adhesive 25 is applied to the central portions and a measurement in the example where the adhesive 25 is applied to the outer peripheries, the heat retention is better by 1°C to 2°C than that of the plastic lid. This is due to the heat insulating effect of the space portion 26. As described above, the heat retention effect of the paper lid 1 which was environmentally friendly could be confirmed. Incidentally, the joining of the top lid portion 2 and the engaging portion 12 is not limited to bonding, and as long as the space portion 26 can be formed, any joining method may be used.

### (Other Modification Examples)

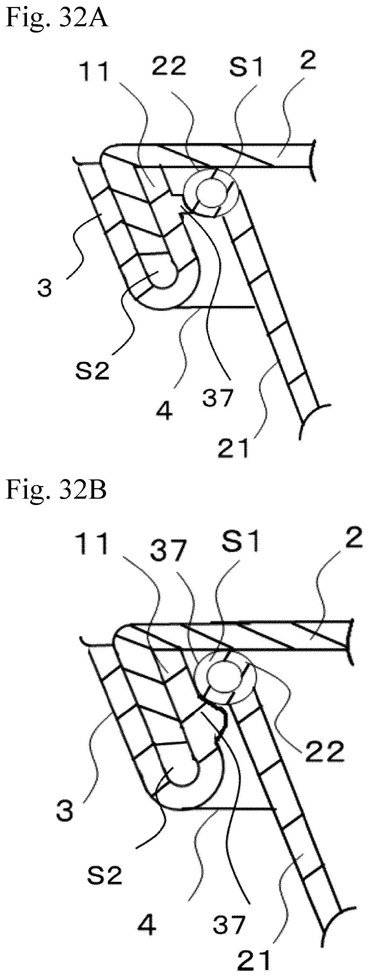

Fig. 32 is a modification example of the paper lid 1 of the fourth embodiment illustrated in Fig. 22. In Fig. 32(a), the protruding portion 37 is shaped to conform to the circumferential shape of the curl portion 22. As described above, when the shape of the protruding portion 37 is a circumferential shape, it is preferable that an upper side of the curl portion 22 is shaped to come into contact with the top lid portion 2.

In Fig. 32(b), the shape of the protruding portion 37 conforms to the circumferential shape of the curl portion 22, and a part of the curl portion 22 is held from below.

It is preferable that as illustrated in Figs. 32(a) and 32(b), the part of the curl portion 22 is held from below and the upper side of the curl portion 22 is shaped to come into contact with the top lid portion 2. Since the curl portion 22 is interposed (embraced) between the protruding portion 37 and the top lid portion 2, it is possible to further improve the sealability between the paper lid 1 and the container 20. In addition, when the protruding portion 37 is shaped such that the curl portion 22 is interposed (embraced) between the protruding portion 37 and the top lid portion 2, it is possible to reduce the amount of deformation of the curl portion 22. Accordingly, even when the paper lid 1 is repeatedly fitted to or removed from the container 20, it is possible to inhibit a deterioration in sealability between the paper lid 1 and the container 20.

When the content of the container 20 is a hot beverage, there is a risk that the protruding portion 37 is deformed due to steam or heat or the protruding portion 37 and the curl portion 22 slide on each other to cause a deterioration in sealability between the paper lid 1 and the container 20. However, when the protruding portion 37 is shaped to support a lower side of the curl portion 22, the influence when the protruding portion 37 is deformed is small, and the influence when the protruding portion 37 and the curl portion 22 slide on each other is also small. Incidentally, as long as the protruding portion 37 is shaped to support the curl portion 22, the protruding portion 37 may have a tapered shape, or a plurality of the protruding portions 37 may support the curl portion 22.

In addition, the top lid portion 2 of which the outer periphery is bent by press working is fitted between the tapered portion 3 having a U-shaped cross-section and the second tapered portion 11; however, the dimensions of the bent part are shortened to form a space S2. As described above, since the dimensions of the bent part are shortened, it is possible to reduce the amount of the paper material which is used to produce the top lid portion 2. In addition, since the rigidities of the tapered portion 3 having a U-shaped cross-section and the second tapered portion 11 can be reduced by the space portion S2, the curl portion 22 easily enters the paper lid 1.

Incidentally, also in the modification example of Fig. 32, the weak tapered portion 11b illustrated in Fig. 27 may be provided and the linear portion 11c may be provided.

In addition, when the sealability between the paper lid 1 and the container 20 can be secured by the protruding portion 37, the tapered portion 3 and the second tapered portion 11 may have a linear shape. Also in this case, as illustrated in Fig. 22, the height H2 of the peripheral wall may be set to be from approximately 36% to 48% of the entire height H1; and thereby, a plurality of the paper lids 1 can be easily stacked.

The foregoing embodiments are exemplary embodiments. However, the present invention is not limited to the foregoing embodiments, and the foregoing embodiments may be appropriately combined, or a part of the configurations may be omitted. In addition, the configurations may be partially modified. For example, a cut may be provided in the curl portion 9 to weaken the rigidity of the curl portion 9. The container 20 using the curl portion 9 provided with the cut may be fitted from outside. In addition, the technique where a part of the press machine is heated when press working is performed has been disclosed, and also when ultrasonic joining is performed, a part (for example, a part holding the paper lid 1) of an ultrasonic joining device may be heated to approximately 50°C to 85°C. As described above, since the paper lid 1 is produced while being subjected to heat, even when the content of the container 20 is a hot beverage (60°C to 100°C), the paper lid 1 is less likely to be deformed to the shape before press working; and thereby, it is possible to reduce the risk that the paper lid 1 is removed from the container 20.

In addition, at least one member of the engaging portion 12, the base portion 12a, the engaging part 12b, the curl portion 29, and the engaging portion 36 may be made of an air-laid material where crushed pulps are laminated together. In this case, the basis weight of the air-laid material is from 20 g/m² to 100 g/m², preferably from 40 g/m² to 60 g/m². In addition, it is desirable that films (for example, polyethylene films) are laminated on both surfaces of the air-laid material and are joined thereto by ultrasonic joining. Since the air-laid material is used, the air-laid material is capable of serving as a cushioning member or a packing.

Incidentally, the paper lid 1 of the present embodiment may be used as a lid for a food such as a confection, or may be used as a lid of a wet tissue package accommodating wet tissues.

As described above, various modifications can be made without departing from the scope of the appended claims.

### [DESCRIPTION OF LETTERS OR NUMERALS]

- 1: PAPER LID
- 2: TOP LID PORTION
- 3: TAPERED PORTION
- 5: DRINKING SPOUT
- 6: GROOVE PORTION
- 8: SEAL PORTION
- 9: CURL PORTION
- 10: MARK
- 20: CONTAINER
- 21: TAPERED PORTION
- 22: CURL PORTION
- 30: HOLDER
- 31: HINGE

## Claims

1. A kit of parts comprising a paper lid (1) and a container (20) including an opening portion, a taper (21), and a curl portion (22), wherein the paper lid (1) to be mounted on the container (20) comprises:
a lid body portion that includes a paper material to be mounted on the container (20);
an engaging portion that
- is provided in the lid body portion,
- includes a taper (11) in the same direction as a direction of the taper (21) of the container (20), and
- is capable of engaging with the curl portion (22) from outside the curl portion (22); and
a body portion side curl portion (9) that is provided in the lid body portion and is positioned above the engaging portion.

2. The kit of parts according to claim 1, comprising:
a top lid portion (2) which is provided between the engaging portion and the body portion side curl portion (9) and in which a drinking spout (5) is formed.

3. The kit of parts according to claim 2,
wherein a seam is formed in the lid body portion, and
the drinking spout (5) is provided at a position where the drinking spout (5) does not interfere with the seam.

4. The kit of parts according to claim 2,
wherein a peripheral wall portion connected to the body portion side curl portion (9) is provided on an outer periphery of the top lid portion (2), and
a display portion to which a plurality of displays related to a content of the container are applied is formed in the peripheral wall portion.

5. The kit of parts according to claim 4,
wherein the body portion side curl portion is configured to be deformable such that the content can be identified from the plurality of displays based on a deformation of the body portion side curl portion (9).

6. The kit of parts according to claim 1,
wherein the inner diameter of a tip of the taper (11) of the engaging portion is smaller than the outer diameter of the curl portion (22) of the container (20).

7. The kit of parts according to claim 1,
wherein a size of the body portion side curl portion (9) is different from a size of the curl portion (22) of the container (20).

8. The kit of parts according to claim 1,
wherein the lid body portion is provided with a view portion through which an inside of the container is visible.

9. The kit of parts according to claim 2, comprising:
a seal portion (8) including a first joining portion (8a) to be joined to the drinking spout (5), and a pull-up portion (8b) with which the drinking spout (5) is openable.

10. The kit of parts according to claim 9,
wherein the seal portion (8) includes a second joining portion to be joined to the top lid portion, and
a joining force of the first joining portion is larger than a joining force of the second joining portion.

11. The kit of parts according to claim 2,
wherein a height from the body portion side curl portion (9) to the top lid portion (2) is from 6% to 53% of a height of the lid body portion.

12. The kit of parts according to claim 1,
wherein the engaging portion includes a protruding portion (37) having a circumferential shape.

13. The kit of parts according to claim 6,
wherein an inner surface of the taper (11) of the engaging portion is arranged to contact the curl portion (22) of the container (20) when the opening portion of the container (20) is closed.

14. The kit of parts according to claim 1,
wherein the paper lid (1) comprises another engaging portion (12) that is capable of engaging with an inside of the curl portion (22) of the container (20).

15. The kit of parts according to claim 1, wherein the paper lid (1) is removably mounted on the container (20) such that the paper lid (1) can be mounted on the container (20) again after being removed.

16. Use of a paper lid (1) for mounting on a container (20) including an opening portion, a taper (21), and a curl portion (22), wherein the paper lid (1) comprises:
a lid body portion that includes a paper material to be mounted on the container;
an engaging portion that
- is provided in the lid body portion,
- includes a taper (11) in the same direction as a direction of the taper (21) of the container (20), and
- is capable of engaging with the curl portion (22) from outside the curl portion (22); and
a body portion side curl portion (9) that is provided in the lid body portion and is positioned above the engaging portion,
wherein the mounting is achieved by engaging the engaging portion (11) of the paper lid (1) with the curl portion (22) of the container (20) from outside the curl portion (22).

## Patentansprüche

1. Satz aus Teilen, umfassend einen Papierdeckel (1) und einen Behälter (20), der einen Öffnungsabschnitt, eine Verjüngung (21) und einen spiralig eingerollten Abschnitt (22) aufweist, wobei der auf den Behälter (20) zu montierende Papierdeckel (1) Folgendes umfasst:
einen auf den Behälter (20) zu montierenden Deckelkörperabschnitt, der ein Papiermaterial aufweist,
einen Eingriffsabschnitt, der
- in dem Deckelkörperabschnitt vorgesehen ist,
- eine Verjüngung (11) in der gleichen Richtung wie eine Richtung der Verjüngung (21) des Behälters (20) aufweist und
- in der Lage ist, mit dem spiralig eingerollten Abschnitt (22) von außerhalb des spiralig eingerollten Abschnitts (22) in Eingriff zu kommen, und
einen spiralig eingerollten Seitenabschnitt (9) des Körperabschnitts, der in dem Deckelkörperabschnitt vorgesehen und über dem Eingriffsabschnitt positioniert ist.

2. Satz aus Teilen nach Anspruch 1, umfassend:
einen oberen Deckelabschnitt (2), das zwischen dem Eingriffsabschnitt und dem spiralig eingerollten Seitenabschnitt (9) des Körperabschnitts vorgesehen ist und in dem ein Trinkstutzen (5) ausgebildet ist.

3. Satz aus Teilen nach Anspruch 2,
wobei eine Naht in dem Deckelkörperabschnitt gebildet ist und
der Trinkstutzen (5) an einer Position vorgesehen ist, an der der Trinkstutzen (5) die Naht nicht stört.

4. Satz aus Teilen nach Anspruch 2,
wobei ein Umfangswandabschnitt, der mit dem spiralig eingerollten Seitenabschnitt (9) des Körperabschnitts verbunden ist, an einem Außenumfang des oberen Deckelabschnitts (2) vorgesehen ist und
in dem Umfangswandabschnitt ein Anzeigeabschnitt ausgebildet ist, auf den eine Vielzahl von Anzeigen mit Bezug auf einen Inhalt des Behälters aufgebracht sind.

5. Satz aus Teilen nach Anspruch 4,
wobei der spiralig eingerollte Seitenabschnitt des Körperabschnitts verformbar ausgestaltet ist, so dass der Inhalt anhand der Vielzahl von Anzeigen basierend auf einer Verformung des spiralig eingerollten Seitenabschnitts (9) des Körperabschnitts identifiziert werden kann.

6. Satz aus Teilen nach Anspruch 1,
wobei der Innendurchmesser einer Spitze der Verjüngung (11) des Eingriffsabschnitts kleiner als der Außendurchmesser des spiralig eingerollten Abschnitts (22) des Behälters (20) ist.

7. Satz aus Teilen nach Anspruch 1,
wobei sich eine Größe des spiralig eingerollten Seitenabschnitts (9) des Körperabschnitts von einer Größe des spiralig eingerollten Abschnitts (22) des Behälters (20) unterscheidet.

8. Satz aus Teilen nach Anspruch 1,
wobei der Deckelkörperabschnitt mit einem Sichtabschnitt versehen ist, durch den ein Inneres des Behälters sichtbar ist.

9. Satz aus Teilen nach Anspruch 2, umfassend:
einen Dichtungsabschnitt (8), der einen mit dem Trinkstutzen (5) zu verbindenden ersten Verbindungsabschnitt (8a) aufweist, und einen Aufziehabschnitt (8b), mit dem der Trinkstutzen (5) geöffnet werden kann.

10. Satz aus Teilen nach Anspruch 9,
wobei der Dichtungsabschnitt (8) einen mit dem oberen Deckelabschnitt zu verbindenden zweiten Verbindungsabschnitt aufweist und
eine Verbindungskraft des ersten Verbindungsabschnitts größer als eine Verbindungskraft des zweiten Verbindungsabschnitts ist.

11. Satz aus Teilen nach Anspruch 2,
wobei eine Höhe von dem spiralig eingerollten Seitenabschnitt (9) des Körperabschnitts zu dem oberen Deckelabschnitt (2) 6 % bis 53 % einer Höhe des Deckelkörperabschnitts beträgt.

12. Satz aus Teilen nach Anspruch 1,
wobei der Eingriffsabschnitt einen vorstehenden Abschnitt (37) mit einer Umfangsform aufweist.

13. Satz aus Teilen nach Anspruch 6,
wobei eine Innenfläche der Verjüngung (11) des Eingriffsabschnitts so angeordnet ist, dass sie den spiralig eingerollten Abschnitt (22) des Behälters (20) berührt, wenn der Öffnungsabschnitt des Behälters (20) geschlossen ist.

14. Satz aus Teilen nach Anspruch 1,
wobei der Papierdeckel (1) einen weiteren Eingriffsabschnitt (12) umfasst, der in der Lage ist, mit einer Innenseite des spiralig eingerollten Abschnitts (22) des Behälters (20) in Eingriff zu kommen.

15. Satz aus Teilen nach Anspruch 1, wobei der Papierdeckel (1) abnehmbar auf dem Behälter (20) montiert ist, so dass der Papierdeckel (1) nach dem Entfernen wieder auf dem Behälter (20) montiert werden kann.

16. Verwendung eines Papierdeckels (1) zum Montieren auf einem Behälter (20), der einen Öffnungsabschnitt, eine Verjüngung (21) und einen spiralig eingerollten Abschnitt (22) umfasst, wobei der Papierdeckel (1) Folgendes umfasst:
einen auf den Behälter zu montierenden Deckelkörperabschnitt, der ein Papiermaterial aufweist,
einen Eingriffsabschnitt, der
- in dem Deckelkörperabschnitt vorgesehen ist,
- eine Verjüngung (11) in der gleichen Richtung wie eine Richtung der Verjüngung (21) des Behälters (20) aufweist und
- in der Lage ist, mit dem spiralig eingerollten Abschnitt (22) von außerhalb des spiralig eingerollten Abschnitts (22) in Eingriff zu kommen, und
einen spiralig eingerollten Seitenabschnitt (9) des Körperabschnitts, der in dem Deckelkörperabschnitt vorgesehen und über dem Eingriffsabschnitt positioniert ist,
wobei das Montieren durch Ineingriffbringen des Eingriffsabschnitts (11) des Papierdeckels (1) mit dem spiralig eingerollten Abschnitt (22) des Behälters (20) von außerhalb des spiralig eingerollten Abschnitts (22) erzielt wird.

## Revendications

1. Kit de pièces comprenant un couvercle en papier (1) et un récipient (20) incluant une partie d'ouverture, un effilement (21) et une partie enroulée (22), dans lequel le couvercle en papier (1) à monter sur le récipient (20) comprend :
une partie corps de couvercle qui inclut un matériau en papier à monter sur le récipient (20) ;
une partie d'engagement qui
- est prévue dans la partie corps de couvercle,
- inclut un effilement (11) dans la même direction que la direction de l'effilement (21) du récipient (20), et
- est capable de s'engager avec la partie enroulée (22) depuis l'extérieur de la partie enroulée (22) ; et
une partie enroulée (9) côté partie corps qui est prévue dans la partie corps de couvercle et est positionnée au-dessus de la partie d'engagement.

2. Kit de pièces selon la revendication 1, comprenant :
une partie supérieure de couvercle (2) qui est prévue entre la partie d'engagement et la partie enroulée (9) côté partie corps et dans laquelle est formé un bec verseur (5).

3. Kit de pièces selon la revendication 2,
dans lequel une jonction est formée dans la partie corps de couvercle, et
le bec verseur (5) est prévu à une position où le bec verseur (5) n'interfère pas avec la jonction.

4. Kit de pièces selon la revendication 2,
dans lequel une partie de paroi périphérique reliée à la partie enroulée (9) côté partie corps est prévue sur une périphérie extérieure de la partie supérieure de couvercle (2), et
une partie d'affichage sur laquelle sont appliqués une pluralité d'affichages liés au contenu du récipient est formée dans la partie de paroi périphérique.

5. Kit de pièces selon la revendication 4,
dans lequel la partie enroulée côté partie corps est configurée pour être déformable de sorte que le contenu puisse être identifié à partir de la pluralité d'affichages sur la base d'une déformation de la partie enroulée (9) côté partie corps.

6. Kit de pièces selon la revendication 1,
dans lequel le diamètre intérieur d'une pointe de l'effilement (11) de la partie d'engagement est inférieur au diamètre extérieur de la partie enroulée (22) du récipient (20).

7. Kit de pièces selon la revendication 1,
dans lequel une taille de la partie enroulée (9) côté partie corps est différente d'une taille de la partie enroulée (22) du récipient (20).

8. Kit de pièces selon la revendication 1,
dans lequel la partie corps de couvercle est pourvue d'une partie de visualisation à travers laquelle l'intérieur du récipient est visible.

9. Kit de pièces selon la revendication 2, comprenant :
une partie d'étanchéité (8) incluant une première partie d'assemblage (8a) à assembler au bec verseur (5), et une partie à tirer (8b) permettant d'ouvrir le bec verseur (5).

10. Kit de pièces selon la revendication 9,
dans lequel la partie d'étanchéité (8) inclut une seconde partie d'assemblage à assembler à la partie supérieure de couvercle, et
la force d'assemblage de la première partie d'assemblage est supérieure à la force d'assemblage de la seconde partie d'assemblage.

11. Kit de pièces selon la revendication 2,
dans lequel une hauteur de la partie enroulée (9) côté partie corps à la partie supérieure de couvercle (2) est comprise entre 6% et 53% d'une hauteur de la partie corps de couvercle.

12. Kit de pièces selon la revendication 1,
dans lequel la partie d'engagement inclut une partie saillante (37) ayant une forme circonférentielle.

13. Kit de pièces selon la revendication 6,
dans lequel une surface intérieure de l'effilement (11) de la partie d'engagement est agencée pour entrer en contact avec la partie enroulée (22) du récipient (20) lorsque la partie d'ouverture du récipient (20) est fermée.

14. Kit de pièces selon la revendication 1,
dans lequel le couvercle en papier (1) comprend une autre partie d'engagement (12) qui est capable de s'engager avec l'intérieur de la partie enroulée (22) du récipient (20).

15. Kit de pièces selon la revendication 1, dans lequel le couvercle en papier (1) est monté de manière amovible sur le récipient (20) de sorte que le couvercle en papier (1) puisse être remonté sur le récipient (20) après avoir été retiré.

16. Utilisation d'un couvercle en papier (1) pour le montage sur un récipient (20) incluant une partie d'ouverture, un effilement (21) et une partie enroulée (22), dans laquelle le couvercle en papier (1) comprend :
une partie corps de couvercle qui inclut un matériau en papier à monter sur le récipient ;
une partie d'engagement qui
- est prévue dans la partie corps de couvercle,
- inclut un effilement (11) dans la même direction que la direction de l'effilement (21) du récipient (20), et
- est capable de s'engager avec la partie enroulée (22) depuis l'extérieur de la partie enroulée (22) ; et
une partie enroulée (9) côté partie corps qui est prévue dans la partie corps de couvercle et est positionnée au-dessus de la partie d'engagement,
dans laquelle le montage est réalisé en engageant la partie d'engagement (11) du couvercle en papier (1) avec la partie enroulée (22) du récipient (20) depuis l'extérieur de la partie enroulée (22).
